# EUROPÄISCHE PATENTSCHRIFT

(11) **EP 0 520 001 B1**
(45) Veröffentlichungstag und Bekanntmachung des Hinweises auf die Patenterteilung: **11.08.1993**
(21) Anmeldenummer: 91906397.4
(22) Anmeldetag: 15.03.1991
(51) Int. Cl.: B41J 29/02, B41J 11/54, B41J 32/00

(54) **DRUCKER MIT EINEM IN DER DRUCKTRÄGEREBENE GETEILTEN DRUCKERGEHÄUSE**
PRINTER WITH A PRINTER HOUSING DIVIDED IN THE PLANE OF THE PRINT CARRIER
IMPRIMANTE AVEC LOGEMENT SUBDIVISE SUR LE PLAN DU SUPPORT D'IMPRESSION

(30) Priorität: 16.03.1990 DE 4008541
(43) Veröffentlichungstag der Anmeldung: 30.12.1992
(73) Patentinhaber: Siemens Nixdorf Informationssysteme Aktiengesellschaft, 33102 Paderborn (DE)
(72) Erfinder: MALKE, Wolfgang, D-1000 Berlin 28 (DE); BAITZ, Günter, D-1000 Berlin 27 (DE); WIESCHEMANN, Siegfried, D-4790 Paderborn-Marienloh (DE)
(74) Vertreter: Fuchs, Franz-Josef, Dr.-Ing.
(86) Internationale Anmeldenummer: EP9100494
(87) Internationale Veröffentlichungsnummer: WO9113765

(56) Entgegenhaltungen:
- EP-A- 0 150 761
- GB-A- 2 221 898
- US-A- 4 011 811
- US-A- 4 531 852
- US-A- 4 655 625
- US-A- 4 775 870
- PATENT ABSTRACTS OF JAPAN vol. 12, no. 386 (M-754)(3233) 14 October 1988, JP-A-63 139 774

## Beschreibung

Die vorliegende Erfindung betrifft einen Drucker der im Oberbegriff des Anspruches 1 genannten Art. Es sei bemerkt, daß im folgenden der Begriff "Druckträger" für das jeweilige zu bedruckende Material verwendet wird, das vorzugsweise Papier ist.

Eine Konstruktion, bei der der Drucker in der im Anspruch 1 beschriebenen Weise geteilt ist, bietet einerseits die Möglichkeit, den Gehäuseaufsatz austauschbar zu machen, um den Drucker beispielsweise an unterschiedliche Druckverfahren anzupassen; andererseits ermöglicht eine derartige Teilung in besonders günstiger Weise einen Zugang zu einzelnen Funktionsbauteilen für den Servicefall, bzw. zum Papiertransportkanal für den Fall eines Papierstaus.

Ein Drucker der im Oberbegriff des Anspruches 1 genannten Art ist durch die DE 35 11 386 A1 bekannt geworden. Bei diesem Drucker sind im unteren Gehäuseteil zwei übereinander liegende Druckträgerebenen vorgesehen, für die jeweils ein Druckkopf, ein Druckwiderlager und eine Papiertransporteinrichtung vorhanden sind. Diese Anordnung soll es ermöglichen, den Drucker wahlweise mit mehreren Druckstationen auszustatten, um ihn beispielswise als Kassendrucker mit einer Belegdruckstation, einer Journaldruckstation und einer Bon-Druckstation verwenden zu können. Der bekannte Drucker verwendet als Farbbandanlage eine Farbbandkassette, die in den unteren Gehäuseteil in einem seitlichen Bereich hochkant eingesetzt wird. Durch die bei der bekannten Konstruktion vorgesehene Anordnung zweier Druckträgerebenen übereinander und die hochkant gestellte Farbbandkassette ergibt sich eine hohe Bauform, die wiederum zur Folge hat, daß die elektrischen und elektronischen Funktionsbauteile in ungünstiger Weise über den gesamten Innenraum des Druckergehäuses verteilt sind, so daß sie über Kabelbäume miteinander und mit einer im Drukkergehäuse vorgesehenen Steuerungselektronik verbunden werden müssen, was die Montage und auch den Service eines derartigen Druckers erschwert und verteuert.

Es ist die Aufgabe der vorliegenden Erfindung, einen Drucker der im Oberbegriff des Anspruches 1 genannten Art zu schaffen, welcher flexibel an unterschiedliche Druckaufgaben anpaßbar ist, dabei trotzdem eine sehr flache Bauform hat und bei welchem insbesondere die Montage der elektrischen und elektronischen Funktionsbauteile sowie an diesen ausgeführte Serviceleistungen vereinfacht und damit verbilligt werden.

Diese Aufgabe ist erfindungsgemäß durch die im Anspruch 1 enthaltenen Merkmale gelöst.

Bei dem erfindungsgemäßen Drucker ist nur eine in der Teilungsebene des Druckergehäuses liegende Druckträgerebene und ein dieser Druckträgerebene zugeordneter Druckkopf vorgesehen. Bei einer Basisversion des Drukkers bildet dieser Druckkopf mit den im unteren Gehäuseteil angeordneten, für seinen Betrieb erforderlichen Funktionsbauteilen einerseits und die im Gehäuseaufsatz angeordneten Funktionsbauteile andererseits eine erste Druckstation, beispielsweise für Einzelblatt- und Endlosblattdruck. Der Fortfall mehrerer übereinander liegender Druckträgerebenen stellt eine erste wesentliche Maßnahme zur Reduzierung der Bauhöhe des Druckers dar, wobei, wie weiter hinten genauer beschrieben wird, die Möglichkeit besteht, mehrere, beispielsweise drei Druckstationen einzurichten.

Eine weitere Maßnahme zur Verringerung der Bauhöhe ist, im unteren Gehäuseteil eine elektrische bzw. elektronische Antriebs- und Steuerungsmodulanordnung vorzusehen, mit der im wesentlichen alle elektrischen und elektronischen Funktionsbauleile des Druckers direkt steckverbunden sind. Dadurch ergibt sich eine sehr kompakte Anordnung dieser Funktionsbauteile und es wird eine Voraussetzung für eine besonders flach bauende Anordnung geschaffen, wie anhand eines Ausführungsbeispieles weiter hinten genauer beschrieben wird. Außerdem entfallen beispielsweise durch direkte Steckverbindungen der Funktionsbauteile mit der Antriebs- und Steuerungsmodulanordnung Kabelverbindungen zwischen den Funktionsbauteilen einerseits und zwischen diesen und der Antriebs- und Steuerungsmodulanordnung andererseits, so daß auch die Montage und eventuelle Servicearbeiten erheblich erleichtert werden.

Als dritte wesentliche Maßnahme zur Lösung der gestellten Aufgabe ist vorgesehen, daß die Farbbandkassette im vorderen Bereich des unteren Gehäuseteils so montierbar ist, daß ihre oberen Begrenzungsflächen mit der Druckträgerebene bündig sind; bei einer flach aufliegenden Anordnung entfällt zunächst die Notwendigkeit, die Bauhöhe des Druckergehäuses an die Abmessungen der hochkant stehenden Farbbandkassette anzupassen, so daß auch insoweit eine Reduzierung der Bauhöhe möglich ist. Außerdem kann die Farbbandkassette in diesem Fall neben ihrer Aufgabe, das Farbband aufzunehmen, eine zusätzliche Aufgabe erfüllen, indem sie beispielsweise als Auflagetisch für einen Druckträger dient, so daß ein gesonderter Auflagetisch etwa oberhalb der Farbbandkassette nicht erforderlich ist, was wiederum zu einer Reduzierung der Bauhöhe des Druckers ausgenutzt werden kann.

Eine besonders flach bauende Anordnung der im unteren Gehäuseteil aufgenommenen Funktionsbauteile ergibt sich, wenn erfindungsgemäß die Antriebs- und Steuerungsmodulanordnung als über dem Boden des unteren Gehäuseteils angeordnete flache Schaltungsplatine ausgebildet ist, auf der die zugeordneten Funktionsbauteile entsprechend ihren vorgesehenen räumlichen Anordnungen montiert sind.

Gemäß einer Ausgestaltung der Erfindung ist die Oberseite des unteren Gehäuseteils durch eine im wesentlichen in der Druckträgerebene liegende Deckplatte gebildet, die einen vertieften Bereich zur Aufnahme der flach mit einer zur Druckträgerebene bündigen Oberseite in den vertieften Bereich einlegbaren Farbbandkassette aufweist; die Deckplatte ist mit Durchbrechungen für den Druckkopf, für in Einzugsrichtung des Druckträgers vor bzw. hinter dem Druckkopf liegende untere Transportrollen, gegebenenfalls für den Transportrollen zugeordnete Kupplungsmittel zu im Gehäuseaufsatz angeordneten Funktionsbauteilen und für wenigstens einen Antriebszapfen für die Farbbandkassette versehen. Dabei ist erfindungsgemäß die Durchbrechung für den Druckkopf, die durch einen wenigstens über die Druckzeilenbreite sich erstreckenden Schlitz gebildet ist, in einem in Einzugsrichtung des Druckträgers hinteren, durch die eingelegte Farbbandkassette nicht abgedeckten Teil des vertieften Bereiches angeordnet. Die Durchbrechungen für die vor dem Druckkopf liegenden Transportrollen sind erfindungsgemäß in einem durch die eingelegte Farbbandkassette abdeckten Bereich der Vertiefung angeordnet, wobei die Farbbandkassette selbst mit Durchbrechungen für den Durchtritt dieser Transportrollen versehen ist.

In weiterer Ausgestaltung der Erfindung ist vorgesehen, daß die Farbbandkassette mit bezüglich der Einzugsrichtung des Druckträgers seitlichen Führungsstegen für die Seitenführung des Druckträgers versehen ist, wobei diese seitlichen Führungsstege jeweils mit entsprechenden, auf dem nicht vertieften Bereich der Deckplatte angeordneten Seitenstegen fluchten.

Der Gehäuseaufsatz ist gemäß einer Ausgestaltung der Erfindung um eine quer zur Einzugsrichtung des Druckträgers und parallel zur Druckträgerebene liegende Schwenkachse schwenkbar mit dem unteren Gehäuseteil verbunden; es sind Federmittel vorgesehen, durch die der Gehäuseaufsatz in seine auf dem unteren Gehäuseteil aufliegende Stellung vorbelastet ist. Durch die Federmittel werden die oberen Transportrollen mit einer bestimmten, vorgegebenen Kraft an die unteren Transportrollen bzw. an einen zwischen den Transportrollen befindlichen Druckträger angelegt, wobei unterschiedliche Dicken des Druckträgers automatisch durch die sich ergebenden unterschiedlichen Einstellungen des Gehäuseaufsatzes berücksichtigt werden.

In einer weiteren Ausgestaltung der Erfindung ist vorgesehen, daß der Gehäuseaufsatz zur Aufnahme zusätzlicher Druckstationen ausgelegt ist, die jeweils eine Papiervorratsrolle sowie eine Papiertransporteinrichtung mit Transportrollen und Transportantrieb für den Transport des Papiers von der Papiervorratsrolle entlang dem Druckwiderlager umfassen. Auf diese Weise läßt sich die Basisversion des Druckers um eine oder mehrere Druckstationen erweitern, wobei die zu bedruckenden Druckträger aller Druckstationen über das im Gehäuseaufsatz angeordnete Druckwiderlager geführt und von dem einzigen Druckkopf bedruckt werden, wie anhand eines Ausführungsbespieles näher erläutert wird. Auf diese Weise ist es möglich, den Drucker beispielsweise als Kassendrucker auszubilden, welcher gleichzeitig einen Beleg, einen Journalstreifen und einen Kassenbon bedruckt.

Die mit Hilfe der erfindungsgemäßen Maßnahmen erzielbare flache Bauweise des Druckers ermöglicht es außerdem, ohne Überschreitung einer ergonomisch vertretbaren Bauhöhe unterhalb des Druckers ein zusätzliches Erweiterungsgehäuse zur Aufnahme von zusätzlichen elektrischen und/oder elektronischen Bauteilen vorzusehen; dazu ist erfindungsgemäß der Boden des unteren Gehäuseteils abnehmbar, so daß die Steuerungselektronik des Druckers durch Innenverbindungen mit der Elektronik des Erweiterungsgehäuses verbindbar ist. Das Erweiterungsgehäuse kann beispielsweise eine PC-Hardware aufnehmen, an die über Stecker nur noch Standardgeräte wie Display, Tastatur und Kassenlade angeschlossen werden müssen und/oder spezielle Elektronikbaugruppen, die aus dem Drucker eine komplette Registrierkasse machen.

Bei einem Drucker mit einem schwenkbar mit dem Gehäuseunterteil verbundenen Gehäuseaufsatz gemäß Anspruch 7 besteht das Problem, daß der Abstand der schenkachsenfernen Transportrollen zu ihren Widerlagern im allgemeinen größer ist als bei den schwenkachsennäheren Transportrollen. Zum Ausgleich dieses Effektes sind die konstruktiv besonders einfachen Maßnahmen der Ansprüche 15 oder 20 oder die aufwendigeren, technisch jedoch befriedigenderen Maßnahmen der Ansprüche 16 bis 19 vorgesehen.

Grundsätzlich besteht die Möglichkeit, bei Vorhandensein mehrerer Druckstationen eigene Papiertransportantriebe für die einzelnen Stationen, insbesondere für die einerseits im unteren Gehäuseteil angeordneten Stationen und die andererseits im Gehäuseaufsatz befindlichen Stationen vorzusehen. Eine weitere Vereinfachung und Verbilligung ergibt sich jedoch durch die Maßnahme des Anspruches 21; dadurch können in ähnlicher Weise wie die oberen Transportrollen auch die Papiertransporteinrichtungen der im Gehäuseaufsatz befindlichen Druckstationen durch einen im unteren Gehäuseteil angeordneten Antriebsmotor angetrieben werden.

Um ein unbeabsichtigtes Abheben der auf den unteren Gehäuseteil aufgelegten Farbbandkassette zu verhindern, sind die in den Ansprüchen 23 bis 25 beschriebenen Haltemittel vorgesehen, durch die die Kassette in einfacher Weise in ihrer Betriebsstellung gehalten wird.

Die Widerlager für die unteren Transportrollen können als Rollen oder als Gleitstücke ausgebildet sein, wobei der geringere Transportwiderstand von Rollen durch einen etwas höheren Bauaufwand erkauft wird. Die Widerlager können am Gehäuseaufsatz starr oder gefedert oder auch in der beschriebenen Weise über parallel geführte Träger angeodnet sein. In einer weiteren Ausgestaltung der Erfindung ist vorgesehen, auch die Widerlager am unteren Gehäuseteil anzuordnen, so daß eine aufwendige, unterschiedliche Schwenkwinkel des Gehäuseaufsatzes berücksichtigende Konstruktion nicht erforderlich ist. In einem weiteren Ausführungsbeispiel ist vorgesehen, die Transportrollenwiderlager auf einer eigenen, am unteren Gehäuseteil schwenkbar gelagerten Schwinge anzuordnen.

Um auch z.B. bei einer Aufstellung des Druckers auf einer unebenen Auflagefläche einen Geräteverzug auszuschließen und eine parallele Ausrichtung des Gehäuseaufsatzes gegenüber dem unteren Gehäuseteil sicherzustellen, ist die Maßnahme des Anspruches 29 vorgesehen.

Die im Anspruch 30 beschriebenen Merkmale dienen der Aufgabe, die Baulänge des Druckers zu verringern. Dabei ist der Auslaufabschnitt vorzugsweise in Transportrichtung des Druckträgers hinter der Druckstation vorgesehen; bei Verwendung beispielsweise von fußverleimten mehrlagigen Druckträgern ist dann eine Verschiebung der Lagen gegeneinander nicht mehr schädlich.

Eine weitere Maßnahme zur Verkürzung der Baulänge des Druckers ist in Anspruch 31 beschrieben.

Die Maßnahmen des Anspruches 35 dienen der Aufgabe, den Transportkanal für das Druckpapier einer Bon-Druckstation, an dessen Ende das Schneidmesser angeordnet ist, besser zugänglich zu machen. Durch die Anordnung des Schneidmessers einerseits und des Gegenmessers andererseits in voneinander trennbaren Teilen des Drukkers wird vor allem auch das Einlegen neuen Druckpapiers erleichtert.

Mehrere Ausführungsbeispiele der Erfindung sind in der Zeichnung dargestellt und im folgenden näher beschrieben. Es zeigen:
- Fig. 1: eine perspektivische, teilweise geschnittene Darstellung eines Druckers in einer Basisausstattung mit abgehobenem Gehäuseaufsatz und geöffnetem Gehäusedeckel;
- Fig. 2: einen um zwei zusätzliche Druckstationen erweiterten Drucker etwa gemäß Fig. 1;
- Fig. 3: einen Drucker etwa gemäß Fig. 2, wobei Gehäuseteile und Deckel fortgelassen sind;
- Fig. 4: schematisch einen Längsschnitt durch einen Drucker etwa gemäß der Fig. 3 im Bereich der Druckträgerebene;
- Fig. 5: einen Drucker etwa gemäß Fig. 2 mit aufgesetztem Gehäuseoberteil und geschlossenem Gehäusedeckel sowie mit untergebautem Erweiterungsgehäuse;
- Fig. 6 bis 11: verschiedene Ausgestaltungen für eine parallele oder annähernd parallele Führung von oberen Transportrollen im Gehäuseaufsatz;
- Fig. 12 bis 14: verschiedene Ausgestaltungen für als Gleitflächen ausgebildete Transportrollenwiderlager;
- Fig. 15 und 16: verschiedene Ausgestaltungen für lose mitlaufende obere Transportrollen;
- Fig. 17: ein Ausführungsbeispiel für am unteren Gehäuseteil angeordnete obere Transportrollen;
- Fig. 18: ein Beispiel für über Kupplungsmittel mit einem im unteren Gehäuseteil angeordneten Antrieb kuppelbare Papiertransporteinrichtungen des Gehäuseaufsatzes;
- Fig. 19 und 20: eine Einrichtung zum Sichern einer Farbbandkassette auf dem Drucker;
- Fig. 21: schematisch besondere Ausgestaltungen eines Papiertransportkanals;
- Fig. 22 und 23: eine Einrichtung zur Parallelführung des Gehäuseaufsatzes;
- Fig. 24: eine besondere Anordnung einer Farbbandkassette;
- Fig. 25 und 26: zwei Ausgestaltungen für ein Schneidmesser einer Bon-Druckstation;
- Fig. 27 und 28: verschiedene Sensoranordnungen für eine Papierüberwachung.

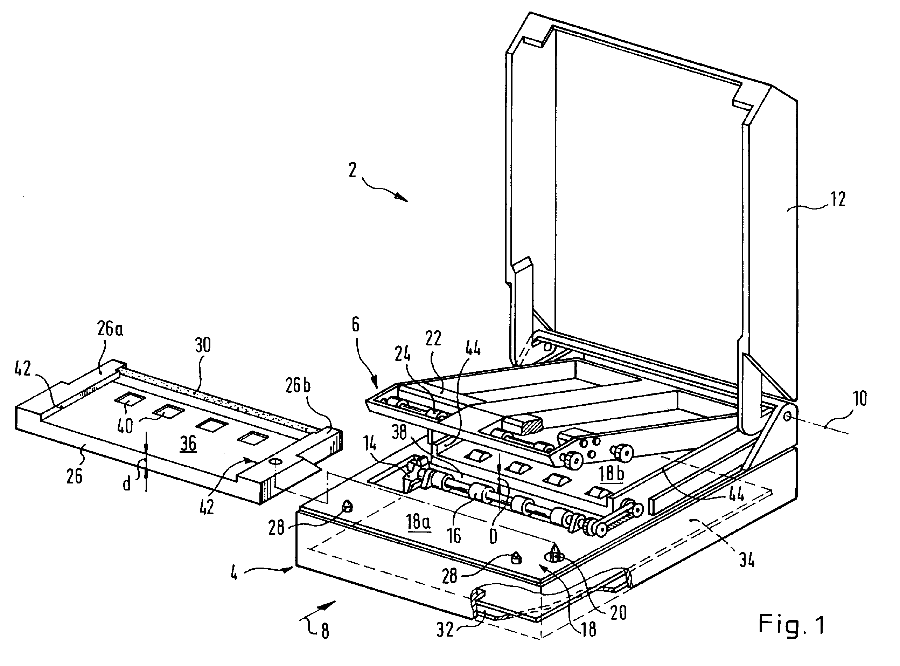

Der in Fig. 1 dargestellte Drucker 2 umfaßt im wesentlichen einen unteren Gehäuseteil 4 sowie einen auf diesen aufsetzbaren bzw. von diesem abhebbaren Gehäuseaufsatz 6. Die Trennungsebene zwischen dem unteren Gehäuseteil 4 und dem Gehäuseaufsatz 6 fällt im wesentlichen mit der Druckträgerebene zusammen, d.h. mit der Ebene, in der ein Druckträger im Drucker 2 transportiert wird. Der Gehäuseaufsatz 6 ist am unteren Gehäuseteil 4 um eine quer zur Einzugsrichtung 8 eines Druckträgers und parallel zur Druckträgerebene liegende Schwenkachse 10 schwenkbar gelagert.

Ein ebenfalls um die Schwenkachse 10 schwenkbar am unteren Gehäuseteil 4 angeordneter Deckel 12 dient dazu, den Drucker 2 bei auf dem unteren Gehäuseteil 4 aufliegendem Gehäuseaufsatz 6 abzudecken und zu verschließen.

Der untere Gehäuseteil 4 nimmt die Antriebs- und Steuerungselektronik auf sowie die damit verbundenen aktiven Funktionsbauteile des Druckers, wie den quer zur Einzugsrichtung 8 in Zeilenrichtung verfahrbaren Druckkopf 14, untere Transportrollen 16 für den Druckträgertransport sowie Antriebsmittel für den Farbbandtransport, von denen in Fig. 1 nur ein durch die Deckplatte 18 hindurch ragender Antriebszapfen dargestellt ist.

Der Gehäuseaufsatz 6 nimmt bei der in Fig. 1 dargestellten Basisausstattung des Druckers im wesentlichen nur inaktive Bauteile auf, nämlich das sich über die ganze Druckzeilenlänge erstreckende Druckwiderlager 22 sowie obere Transportrollen 24, die über noch zu beschreibende Kupplungsmittel mit den unteren Transportrollen 16 antriebsverbunden sind.

Wie Fig. 1 erkennen läßt, hat die Deckplatte 18 einen in Einzugsrichtung 8 vorderen, vertieften Bereich 18a und einen hinteren, demgegenüber höher liegenden Bereich 18b. Auf die Vertiefung bzw. den vertieften Bereich 18a der Deckplatte 18 wird die Farbbandkassette 26 flach aufgelegt, wobei zwei aus der Deckplatte 18 vorstehende Zentrierzapfen 28 in zwei nicht dargestellte Zentrierlöcher der Farbbandkassette 26 eingreifen und diese lagerichtig ausrichten und halten. Der mit einem Farbbandantrieb verbundene Antriebszapfen 20 wird mit innerhalb der Farbbandkassette 26 angeordneten Transportrollen verbunden, die in bekannter und deshalb nicht näher beschriebener Weise den Farbbandtransport bewirken. Die Farbbandkassette 26 hat in ebenfalls bekannter Weise zwei nach vorne vorstehende Arme 26a und 26b, zwischen denen sich das Farbband 30 außerhalb der Farbbandkassette 26 frei spannt. Bei auf die Deckplatte 18 aufgelegter Farbbandkassette 26 verläuft das über geeignete Umlenkmittel in die Schreibebene gedrehte Farbband 30 entlang der Bewegungsbahn des Druckkopfes 14, so daß ein zwischen dem Farbband 30 und dem Druckwiderlager 22 befindlicher Druckträger bedruckt werden kann.

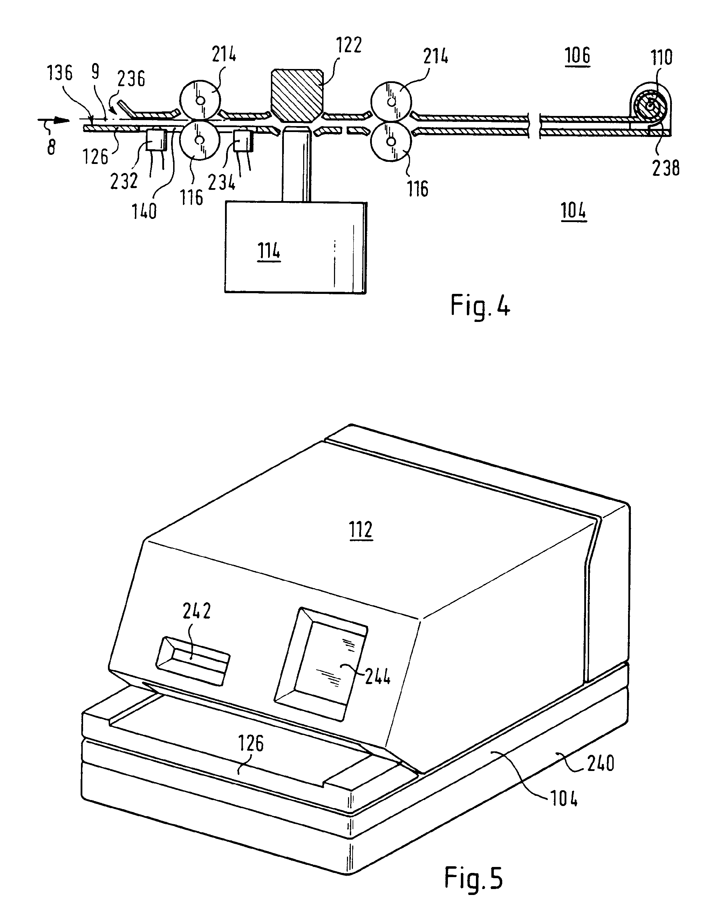

Der Boden 32 des unteren Gehäuseteils 4 ist abnehmbar. Dadurch ist einerseits die über dem Boden 32 angeordnete, die Antriebs- und Steuerungselektronik aufnehmende Schaltungsplatine 34 von unten her gut zugänglich. Andererseits besteht die Möglichkeit, in der anhand der Fig. 5 dargestellten Weise an der Unterseite des unteren Gehäuseteils ein Erweiterungsgehäuse zur Aufnahme von zusätzlichen elektrischen und/oder elektronischen Bauteilen anzuordnen, die dann über Innenverbindungen direkt mit der Schaltungsplatine 34 verbindbar sind. Die Dicke d der Farbbandkassette entspricht dem Maß D, um welches der Bereich 18a der Deckplatte 18 gegenüber dem Bereich 18b vertieft ist. Bei auf die Deckplatte 18 aufgelegter Farbbandkassette 26 ist deren Oberseite 36 demnach mit dem Bereich 18b der Deckplatte 18 bündig und dient als Auflagefläche für einen in den Drucker einzuziehenden Druckträger.

Im Bereich des Übergangs vom vertieften Bereich 18a zum erhöhten Bereich 18b der Deckplatte 18 ist eine Durchbrechung 38 vorgesehen, durch die die Mündung des Druckkopfes 14 hindurchragt. Die Durchbrechung 38 hat die Form eines sich wenigstens über die Druckzeilenlänge erstreckenden Schlitzes. Die Abmessungen der Farbbandkassette 26 sind so, daß sie den Bereich der Durchbrechung, durch den die Mündung des Druckkopfes 14 hindurchragt, nicht überdeckt, so daß der Druckkopf Zugang zu dem über die Durchbrechung 38 hinweg transportierten Druckträger hat. Für die vor dem Schreibbereich liegenden unteren Transportrollen 16 können eigene Durchbrechungen vorgesehen sein. Wie Fig. 1 erkennen läßt, ist die Durchbrechung 38 jedoch im vorliegenden Ausführungsbeispiel so groß, daß auch diese unteren Transportrollen 16 durch diesen nach oben hindurchragen. Da der in Einzugsrichtung 8 hintere Teil der Farbbandkassette 26 den Bereich der Durchbrechung 38, durch den die unteren Transportrollen hindurchragen, abdeckt, sind in der Farbbandkassette 26 Durchtrittsöffnungen 40 ausgebildet, durch die die unteren Transportrollen 16 noch um ein geringes Maß hindurchgreifen, so daß sie in Transporteingriff mit einem auf der Oberseite 36 der Farbbandkassette 26 liegenden Druckträger gelangen können.

Die Farbbandkassette 26 ist mit seitlichen Führungsstegen 42 für die Seitenführung eines auf der Oberseite 36 aufliegenden Druckträgers versehen, die sich in dem erhöhten Bereich 18b zugeordneten Seitenführungen 44 fortsetzen.

Wie in Fig. 1 zu erkennen ist, ist die Durchbrechung 38 auf ihrer in Fig. 1 linken Seite über die Druckzeilenlänge hinaus verlängert, so daß der Druckkopf 14 in eine Ruheposition fahren kann, die außerhalb der durch die Seitenführungen 42 bzw. 44 definierten Druckträgerbreite liegt. Die Durchbrechung 38 ist im Bereich der Ruheposition erweitert, so daß der Druckkopf 14 zu Servicezwecken leicht zugänglich ist.

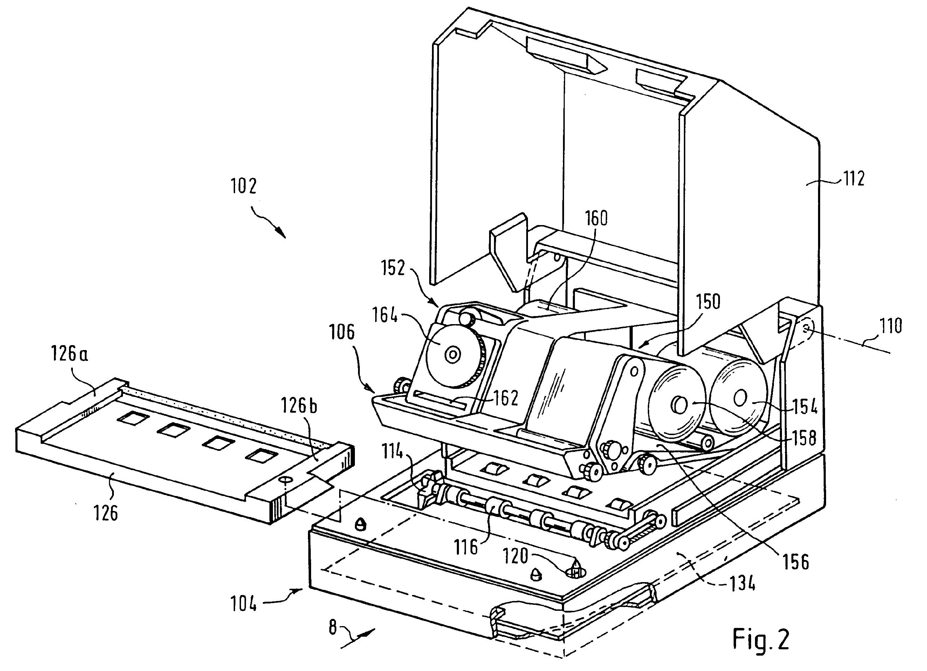

Der in Fig. 2 dargestellte Drucker 102 entspricht im Bereich des unteren Gehäuseteils 104 exakt dem anhand der Fig. 1 schon beschriebenen Drucker 2, so daß insoweit auf eine neuerliche Beschreibung verzichtet werden kann.

Der Gehäuseaufsatz 106 enthält wie im Beispiel gemäß Fig. 1 obere, mit den unteren Transportrollen 116 kuppelbare Transportrollen sowie ein über die ganze Druckzeilenlänge sich erstreckendes Druckwiderlager, wie nicht näher dargestellt wurde. Außerdem sind auf dem Gehäuseaufsatz 106 zwei zusätzliche Druckstationen 150 und 152 angeordnet, die den Drucker 102 zu einem Kassendrucker erweitern, welcher in der unteren, anhand der Fig. 1 beschriebenen Druckstation jeweils einen Beleg sowie zusätzlich einen Bon und einen Journalstreifen bedrucken kann. Die Druckstation 150 umfaßt eine Papiervorratsrolle 154 sowie eine nicht näher dargestellte Papiertransportvorrichtung, mit der das von der Papiervorratsrolle 154 abgezogene Papier 156 unterhalb des nicht dargestellten Druckwiderlagers hindurch und zur Aufwickelrolle 158 hin transportiert wird. Das Papierband 156 dient in der bekannten Weise als Kassenjournal.

Die Druckstation 152 umfaßt ebenfalls eine Papiervorratsrolle 160 und eine nicht dargestellte Papiertransporteinrichtung, die das von der Papiervorratsrolle 160 abgezogene Papier unterhalb des nicht dargestellten Druckwiderlagers hindurch und zu einem Ausgabeschlitz 162 führt, wo es durch eine Schneideinrichtung, von der in Fig. 2 nur ein Antriebsgetrieberad 164 dargestellt ist, abgeschnitten wird.

Es ist zu erkennen, daß sowohl die entsprechend Fig. 1 in Richtung des Pfeiles 8 in die untere Druckstation eingezogenen Druckträger, beispielsweise Belegvordrukke, als auch das von den Papiervorratsrollen 154 bzw. 160 abgezogene Papier jeweils unterhalb des im Gehäuseaufsatz 106 angeordneten, nicht dargestellten Druckwiderlagers entlang geführt wird, so daß die Belege, das Journal und die Kassenbons durch den einzigen Druckkopf 114 bedruckt werden können.

Der Gehäuseaufsatz 106 ist wie im Beispiel der Fig. 1 um eine Schwenkachse 110 gegenüber dem unteren Gehäuseteil 104 schwenkbar, so daß er aus der in Fig. 2 dargestellten abgehobenen Stellung in eine auf dem unteren Gehäuseteil 104 aufliegende Stellung verschwenkt werden kann, wobei die unteren Transportrollen 116 mit den nicht dargestellten, im Gehäuseaufsatz 106 angeordneten oberen Transportrollen in Berührung kommen.

Ein Deckel 112 dient zur Abdeckung des Druckers.

Die in Fig. 2 dargestellte Farbbandkassette 126 entspricht der in Fig. 1 dargestellten Farbbandkassette 26. Es sei angemerkt, daß die seitlichen Führungsstege 126a und 126b für den Fall, daß das Format der über die Farbbandkassette 126 eingezogenen Belege dies erfordert, auch einen geringeren als den dargestellten Abstand voneinander haben können, damit sie ihre Führungsaufgaben erfüllen können. Im übrigen ist es auch möglich, Belege geringerer Breite an einen der seitlichen Führungsstege anzulegen.

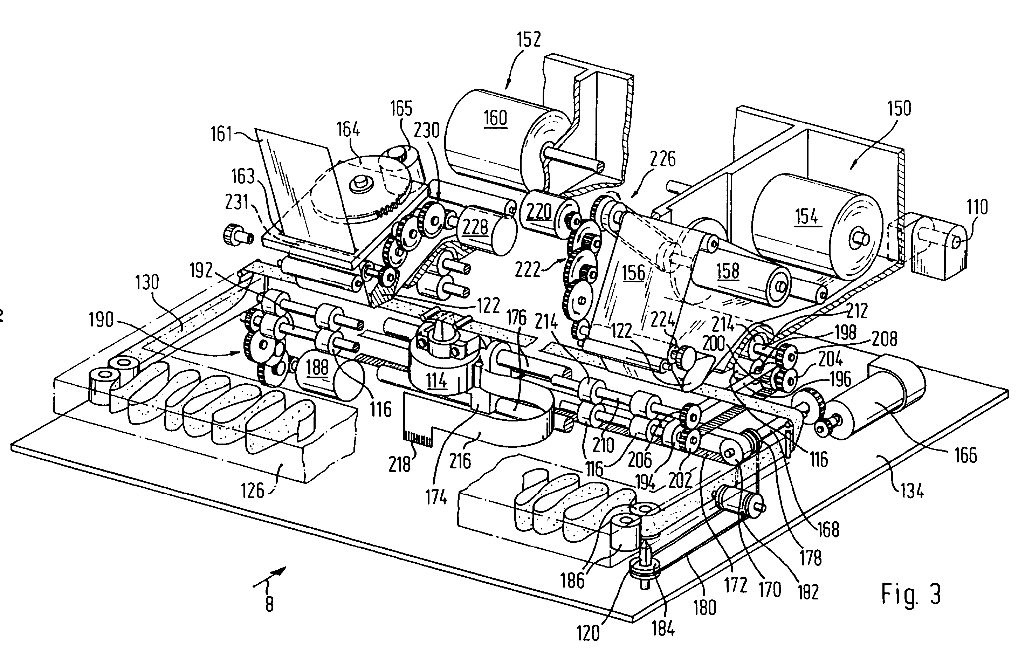

Fig. 3 zeigt einen Drucker etwa gemäß Fig. 2, wobei aus Gründen einer übersichtlicheren Darstellung das Gehäuse und andere, die Sicht auf wesentliche Funktionsbauteile versperrende Einzelheiten fortgelassen worden sind.

Alle wesentlichen, zur Basisausstattung des Druckers gehörenden Funktionsbauteile sind direkt auf einer Schaltungsplatine 134, die die Antriebs- und Steuerungselektronik enthält, befestigt und zwar vorzugsweise über Steckverbindungen. Ein Druckkopfantriebsmotor 166 treibt eine Antriebswelle 168 an, deren freies Ende ein Umlenk- und Antriebsrad 170 für den Antrieb eines sich in Druckzeilenrichtung erstreckenden endlosen Antriebsriemens 172 trägt. Dieser Antriebsriemen 172 ist in an sich bekannter Weise mit einem Carrier 174 verbunden, welcher auf sich in Druckzeilenrichtung erstrekkenden Führungsstangen 176 verschiebbar gelagert ist. Der Carrier 174 trägt den Druckkopf 114.

Die Antriebswelle 168 trägt ein zusätzliches Antriebsrad 178 für den Antrieb eines Antriebsriemens 180, welcher über eine Umlenkrollenanordnung 182 und ein mit dem Antriebszapfen 120 verbundenes Umlenkrad 184 geführt ist. Die Umlenkrollenanordnung 182 kann beispielsweise als Einwegkupplung ausgebildet sein, die bewirkt, daß der Antriebszapfen 120 jeweils nur bei der Hinbewegung oder der Rückbewegung des Druckkopfes 114 angetrieben wird. Wie bereits anhand der Fig. 1 erläutert wurde, dient der Antriebszapfen 120 zum Antrieb von in der Farbbandkassette 126 angeordneten Antriebsrollen 186 für den Antrieb des Farbbandes 130.

Ein Papiertransportmotor 188 treibt über eine Getriebeanordnung 190 eine Antriebswelle 192 an, die die in Einzugsrichtung 8 vor dem Druckbereich liegenden unteren Transportrollen 116 trägt. Die Antriebswelle 192 ist über ein auf deren rechtem Ende angeordnetes Antriebsrad 194, einen Antriebsriemen 196 und ein auf einer Antriebswelle 198 angeordnetes Antriebsrad 200 mit der Antriebswelle 198 gekoppelt, die die in Einzugsrichtung hinter dem Schreibbereich liegenden unteren Transportrollen 116 trägt. Der Papierantriebsmotor treibt demnach stets gleichzeitig die vor bzw. hinter dem Schreibbereich liegenden unteren Transportrollen 116.

An den in Fig. 3 rechten Enden der Antriebswellen 192 bzw. 198 sind Zahnräder 202 bzw. 204 angeordnet. Diese kämmen bei auf den unteren Gehäuseteil aufgesetztem Gehäuseaufsatz jeweils mit Zahnrädern 206 bzw. 208, die auf dem Gehäuseaufsatz drehbar gelagerten Antriebswellen 210 bzw. 212 angeordnet sind. Die Antriebswellen 210 bzw. 212 tragen jeweils vor bzw. hinter dem Schreibbereich angeordnete obere Transportrollen 214. Die oberen Transportrollen 214 kommen bei auf den unteren Gehäuseteil aufgesetztem Gehäuseaufsatz mit den unteren Transportrollen 116 bzw. mit zwischen diesen Transportrollen befindlichen Druckträgern in Berührung.

Der in Druckzeilenrichtung verfahrbare Druckkopf 114 ist über ein flexibles Kabel 216 und einen an dessen Ende angeordneten Steckverbinder 218 mit der Schaltungsplatine 134 elektrisch verbunden.

Die Druckstation 150 für den Journaldruck ist mit einer Antriebseinrichtung für den Papiertransport ausgestattet, die einen Antriebsmotor 220 sowie eine mit diesem antriebsverbundene Getriebeanordnung 222 umfaßt, welche eine mit einer Gegenrolle zusammenwirkende Antriebsrolle 224 antreibt, über die das von der Papiervorratsrolle 154 abgezogene Papier 156 läuft. Von der Getriebeanordnung 222 zweigt eine weitere Getriebeanordnung 226 ab, die die Aufwickelrolle 158 antreibt. Es ist zu erkennen, daß das Papier 156 unterhalb des im Gehäuseaufsatz angeordneten Druckwiderlagers 122 entlanggeführt wird, so daß es vom Druckkopf 114 bedruckt werden kann.

Die Druckstation 152 für den Bondruck ist mit einer Antriebseinrichtung für den Papiertransport ausgestattet, die einen Antriebsmotor 228 und eine mit diesem antriebsverbundene Getriebeanordnung 230 umfaßt, die eine mit einer Gegenrolle zusammendwirkende Antriebsrolle 231 antreibt, über die das von der Papiervorratsrolle 160 abgezogene Papier 161 geführt ist. Das Papier 161 wird nach einem abgeschlossenen Druckvorgang durch eine nicht näher dargestellte Schneideinrichtung, von der in Fig. 3 ein Antriebsgetrieberad 164 und ein mit diesem antriebsverbundener Antriebsmotor 165 gezeigt ist, abgeschnitten; der Kassenbon wird durch einen Ausgabeschlitz 163 ausgegeben.

Die elektrisch bzw. elektronisch angesteuerten Funktionsbauteile der Druckstationen 150 und 152 sind über nicht näher dargestellte Kabelverbindungen mit der Schaltungsplatine 134 verbunden. Diese Kabelverbindungen sind vorzugsweise so verlegt, daß sie von den Druckstationen 150 und 152 zum Bereich der Schwenkachse 110 und von dort zur Schaltungsplatine 134 verlaufen, so daß sich beim Verschwenken des Gehäuseaufsatzes im wesentlichen keine Verlängerung bzw. Verkürzung des Kabelweges ergibt.

Fig. 4 zeigt schematisch einen Längsschnitt durch einen Drucker etwa gemäß der Fig. 3 im Bereich der Druckträgerebene. Der Druckkopf 114 ist senkrecht zur Zeichenebene in Druckzeilenrichtung verfahrbar im unteren Gehäuseteil 104 angeordnet. Der am unteren Gehäuseteil 104 um die Schwenkachse 110 schwenkbar gelagerte Gehäuseaufsatz 106 trägt das Druckwiderlager 122. Die bezüglich der Einzugsrichtung 8 für einen Druckträger 9 vor bzw. hinter dem durch den Druckkopf 114 definierten Schreibbereich angeordneten unteren Transportrollen 116 sind in der anhand der Fig. 3 näher beschriebenen Weise mit einem Transportmotor verbunden. Die den unteren Transportrollen 116 zugeordneten, im Gehäuseaufsatz 106 gelagerten oberen Transportrollen 214 werden bei auf den unteren Gehäuseteil aufgesetztem Gehäuseaufsatz mit den unteren Transportrollen 116 verbunden, wie ebenfalls anhand der Fig. 3 beschrieben wurde.

Die bezüglich der Einzugsrichtung 8 vor dem Druckkopf 114 angeordnete Auflagefläche für den Druckträger 9 wird durch die Oberseite 136 der Farbbandkassette 126 gebildet. Die in Fig. 4 dargestellte obere Deckwand der Farbbandkassette 126 ist mit Durchtrittsöffnungen 140 versehen, durch die die vor dem Schreibbereich liegenden unteren Transportrollen 116 hindurchragen. Wie Fig. 4 weiter zeigt, sind in der Durchtrittsöffnung 140 außerdem vor und hinter der Transportrolle 116 Sensoren 232 bzw. 234 angeordnet, die an die Steuerungselektronik melden, ob ein Druckträger 9 anwesend ist oder nicht. Die Sensoren 232 und 234 im Zusammenhang mit dem in Einzugsrichtung 8 vorderen Transportrollenpaar 116, 214 ersetzen einen bei früheren Druckern üblichen Anschlag, an den der Druckträger zunächst angelegt und damit ausgerichtet wurde. Im vorliegenden Fall wird der Anschlag durch die Berührungslinie der Transportrollen 116, 214 gebildet. Wird ein Druckträger von links in den Einzugsschacht 236 geschoben, so kommt er an dieser Berührungslinie zur Anlage. Die Druckträgervorderkante wird dabei vom ersten Sensor 232 registriert, der nach Ablauf einer Verzögerungszeit den Antriebsmotor für den Antrieb der unteren Transportrolle 116 startet, so daß der Druckträger in Einzugsrichtung 8 transportiert wird. Der hinter dem Transportrollenpaar angeordnete Sensor 234 registriert ebenfalls den Durchlauf der Druckträgervorderkante und gibt ein Bezugssignal für die Zeilensteuerung aus. Wenn der zweite Sensor 234 sein Signal abgibt, ist der Druckträger von dem vorderen Transportrollenpaar bereits sicher erfaßt. Ein Schlupf beim Erfassen des Druckträgers durch das vordere Transportrollenpaar führt also nicht zu Zeilenverschiebungen.

Der Gehäuseaufsatz 106 ist, wie beschrieben, beispielsweise durch eine im Bereich der Schwenkachse 110 angeordnete Spiralfeder 238 so vorbelastet, daß er in die in Fig. 4 dargestellte, auf dem unteren Gehäuseteil 104 aufliegende Stellung gedrückt wird. Die oberen Transportrollen 214 legen sich dadurch mit einer durch die Spiralfeder 238 vorgegebenen Kraft auf die unteren Transportrollen 116 bzw. einen auf diesen aufliegenden Druckträger 9 auf, so daß die Druckträgerdicke automatisch berücksichtigt und der Abstand des Druckwiderlagers 122 zur Mündung des Druckkopfes 114 entsprechend eingestellt wird.

Fig. 5 zeigt einen Drucker etwa entsprechend der Fig. 2 in betriebsfertigem Zustand. Wie nicht zu erkennen ist, ist der Gehäuseaufsatz auf den unteren Gehäuseteil abgesenkt; der Deckel 112 ist geschlossen. Eine Farbbandkassette 126 ist auf den vorderen Teil des unteren Gehäuseteils 104 aufgelegt.

Unterhalb des unteren Gehäuseteils 104 ist ein Erweiterungsgehäuse 240 zur Aufnahme von zusätzlichen elektrischen und/oder elektronischen Bauteilen angeordnet. Da, wie anhand der Fig. 1 beschrieben wurde, der Boden des oberen Gehäuseteils 104 entfernbar ist, besteht die Möglichkeit, die Bauteile des Erweiterungsgehäuses 240 durch direkte Innenverbindungen mit der Schaltungsplatine 134 zu verbinden. Im Erweiterungsgehäuse 240 sind beispielsweise die Elektronikeinschübe eines Personal Computers untergebracht, an die über Stecker nur noch Standardgeräte wie Display, Tastatur usw. angeschlossen werden müssen, und/oder spezielle Elektronikbaugruppen, die aus dem Drucker eine komplette Registrierkasse machen und an die beispielsweise eine Kassenlade angeschlossen wird. Der an der Vorderfront des Deckels 112 ausgebildete Ausgabeschlitz 242 dient zur Ausgabe des Kassenbons (siehe Fig. 3), durch das Sichtfenster 244 ist der aktuelle Aufdruck auf dem Journalpapier 156 zu sehen.

Bei dem in Fig. 4 dargestellten Ausführungsbeispiel sind die vor dem Druckwiderlager angeordneten oberen Transportrollen 214 von der Drehachse 110 des Gehäuseaufsatzes weiter entfernt als die hinter dem Druckwiderlager 122 liegenden oberen Transportrollen. Das hat zur Folge, daß bei jeder Verschwenkung des Gehäuseaufsatzes gegenüber dem unteren Gehäuseteil die vorderen Transportrollen einen größeren Abstand voneinander haben als die hinteren Transportrollen. Insbesondere beim Transport von dickeren Druckträgern, beispielsweise mehrlagigen Formularen, besteht einerseits die Gefahr, daß die vorderen Transportrollen außer Transporteingriff kommen und daß der Abstand des Druckwiderlagers 122 vom Druckkopf 114 zu groß wird. Dieser Mangel kann beispielsweise dadurch ausgeglichen werden, daß die hinter dem Druckwiderlager angeordneten Transportrollen aus einem weicheren Material hergestellt sind als die vor dem Druckwiderlager angeordneten Transportrollen.

Eine andere Möglichkeit, den oben beschriebenen Effekt zu vermeiden, besteht darin, die oberen Transportrollen an einem Träger anzuordnen, welcher seinerseits über Parallelführungen oder dergleichen verstellbar am Gehäuseaufsatz angeordnet ist, derart, daß bei auf dem unteren Gehäuseteil aufliegenden Gehäuseaufsatz die vorderen und hinteren Transportrollen gleichmäßig senkrecht zur Druckträgerebene verstellbar sind.

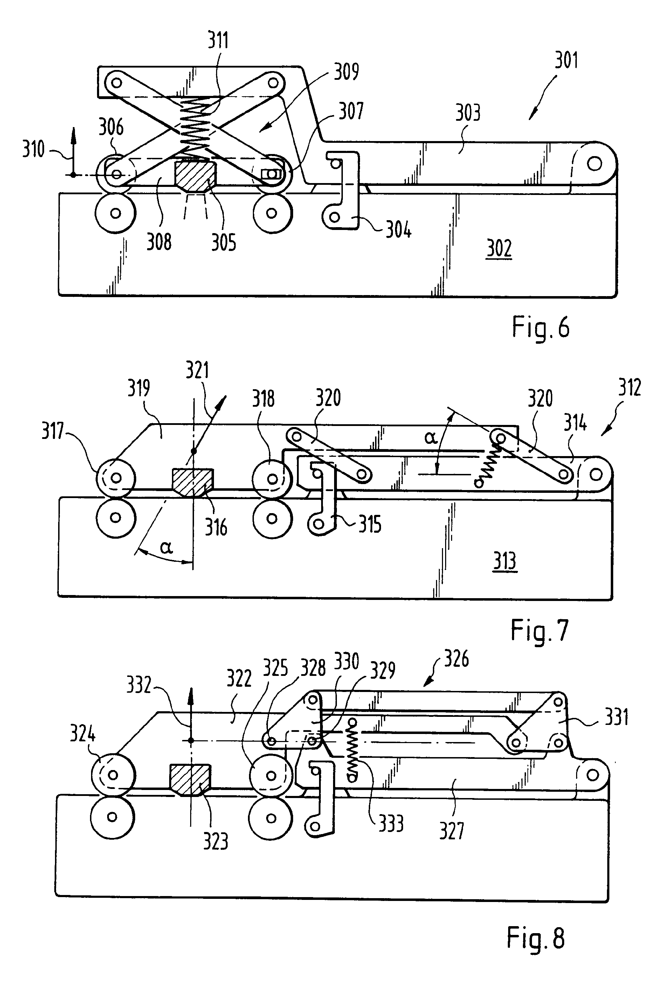

Fig. 6 zeigt schematisch einen Drucker 301 mit einem unteren Gehäuseteil 302 und einem mit diesem schwenkbar verbundenen Gehäuseaufsatz 303. Der Gehäuseaufsatz 303 kann über eine Sperrklinke 304 in der in Fig. 6 dargestellten aufliegenden Betriebsstellung arretiert werden. Das Druckwiderlager 305, die vor diesem angeordneten oberen Transportrollen 306 und die hinter dem Druckwiderlager angeordneten oberen Transportrollen 307 sind an einem gemeinsamen Träger 308 angeordnet. Der Träger 308 ist über eine Gelenkscherenanordnung 309 in Richtung des Pfeiles 310 verstellbar am Gehäuseaufsatz 3 gelagert. Er ist durch eine zwischen dem Träger 308 und dem Gehäuseaufsatz 303 angeordnete Druckfeder 311 in der dem Pfeil 310 entgegengesetzten Richtung vorbelastet. Mit Hilfe dieser Anordnung werden das Druckwiderlager 305 sowie die vor und hinter diesem angeordneten oberen Transportrollen 306 und 307 stets gleichmäßig und zueinander parallel senkrecht zur Druckträgerebene verstellt.

Fig. 7 zeigt wiederum einen Drucker 312 mit einem unteren Gehäuseteil 313 und einem schwenkbaren Gehäuseaufsatz 314, welcher durch eine Sperrklinke 315 in seiner Betriebsstellung gehalten werden kann. Das Druckwiderlager 316 sowie die vor und hinter diesem angeordneten Transportrollen 317 bzw. 318 sind an einem Träger 319 angeordnet, welcher über zwei Parallellenker 320 am Gehäuseaufsatz 314 verstellbar gelagert ist. Wenn der Träger 319 durch einen zwischen den Transportrollen hindurchgeführten Druckträger nach oben abgehoben wird, bewegt er sich etwa tangential zur Ausrichtung der Parallellenker 320, d.h. in Richtung des Pfeiles 321. Auf diese Weise werden das Druckwiderlager 316 und die vor bzw. hinter diesem angeordneten Transportrollen 317 bzw. 318 stets gleichmäßig und parallel abgehoben. Die Tatsache, daß der Träger 319 nicht senkrecht sondern in einem Winkel zur Druckträgerebene abgehoben wird, kann bei kleinen Abhebewegen vernachlässigt werden.

Fig. 8 zeigt ein Ausführungsbeispiel, bei welchem ein Träger 322, an welchem ein Druckwiderlager 323 sowie vor bzw. hinter diesem angeordnete Transportrollen 324, 325 vorgesehen sind, über eine Parallelogrammlenker-Anordnung 226 mit einem schwenkbaren Gehäuseaufsatz 327 verbunden ist. Die Abhebebewegung des Trägers 322 erfolgt im wesentlichen senkrecht zur Verbindungslinie der Anlenkpunkte 328, 329 des den Träger 322 mit dem Gehäuseaufsatz 327 verbindenden vorderen Lenkers 330 (welcher einem hinteren Lenker 331 entspricht), d.h. in Richtung des Pfeiles 332 und damit im wesentlichen senkrecht zur Druckträgerebene. Eine zwischen dem Träger 322 und dem Gehäuseaufsatz 327 angeordnete Zugfeder 333 spannt den Träger 322 in Richtung zur Druckträgerebene hin vor.

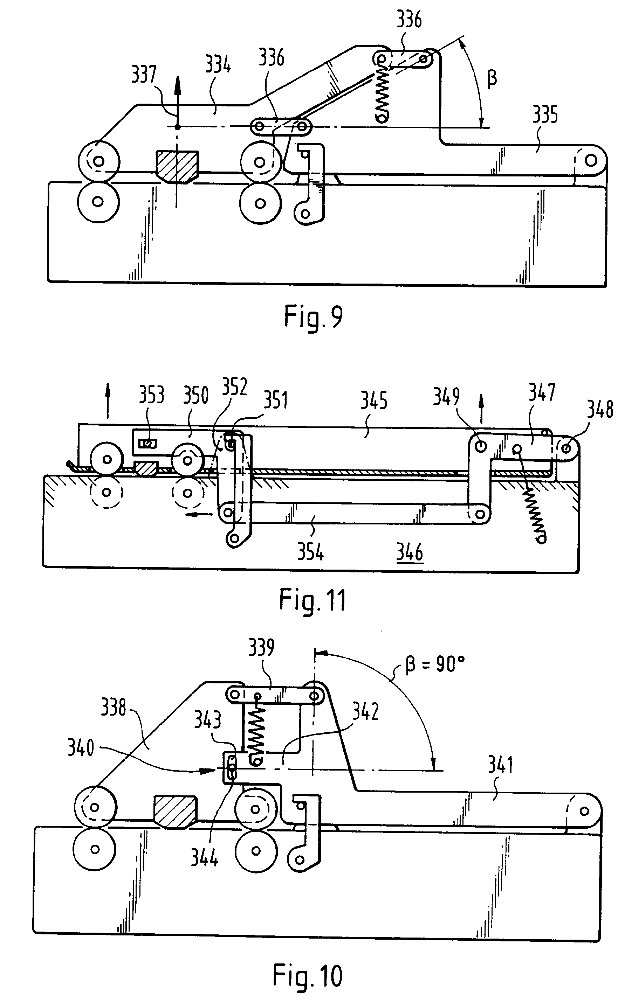

Fig. 9 zeigt eine Anordnung, die im wesentlichen der der Fig. 6 entspricht, so daß sie nicht nochmal im einzelnen beschrieben werden muß. Im Unterschied zur Fig. 6 sind jedoch die den Träger 334 mit dem Gehäuseaufsatz 335 verbindenden Lenker 336 im wesentlichen parallel zur Druckträgerebene ausgerichtet, so daß der Träger 334 im wesentlichen senkrecht dazu, d.h. in Richtung des senkrecht auf der Druckträgerebene stehenden Pfeiles 337 abgehoben wird.

Fig. 10 zeigt eine Anordnung, bei der ein Träger 338 über einen im wesentlichen parallel zur Druckträgerebene stehenden Lenker 339 und eine entsprechend der Schwenkbewegung des Lenkers 339 ausgebildete Schiebeführung 340 mit einem Gehäuseaufsatz 341 verbunden ist. Die Schiebeführung 340 besteht im wesentlichen aus einem an einem Haltearme 342 des Gehäuseaufsatzes 341 ausgebildeten Führungsschlitz 343, in den ein am Träger 338 angeordneter Führungsstift 343 eingreift. Auch diese Anordnung gewährleistet eine Abhebebewegung, die im wesentlichen senkrecht zur Druckträgerebene liegt.

Fig. 11 zeigt eine Anordnung, bei der ein Gehäuseaufsatz 345 nicht direkt sondern über eine Parallelogrammlenker-Anordnung mit dem unteren Gehäuseteil 346 verbunden ist. Der horizontale Arm des hinteren Winkellenkers 347 ist im Anlenkpunkt 348 mit dem unteren Gehäuseteil 346 und im Anlenkpunkt 349 mit dem Gehäuseaufsatz 345 verbunden. Der horizontale Arm des vorderen Winkellenkers 350 ist über seinen hinteren Anlenkpunkt 351 an einem Bock 352 des unteren Gehäuseteils 346 schwenkbar gelagert. Über den vorderen Anlenkpunkt 353 ist der horizontale Arm des vorderen Winkellenkers 350 mit dem Gehäuseaufsatz 345 verbunden. Wenn ein Druckträger zwischen den Transportrollen hindurchläuft, wird der vordere Teil des Gehäuseaufsatzes 345 nach oben hin abgehoben. Dabei wird der horizontale Arm des vorderen Winkelhebels 350 um den Anlenkpunkt 351 nach oben geschwenkt. Er nimmt über seinen vertikalen Arm und den Verbindungslenker 354 den vertikalen Arm des hinteren Winkelhebls 347 mit, welcher um seinen hinteren Anlenkpunkt 348 verschwenkt wird und über den vorderen Anlenkpunkt 349 auch den hinteren Bereich des Gehäuseaufsatzes 345 in dem Maße anhebt, daß dieser parallel bleibt.

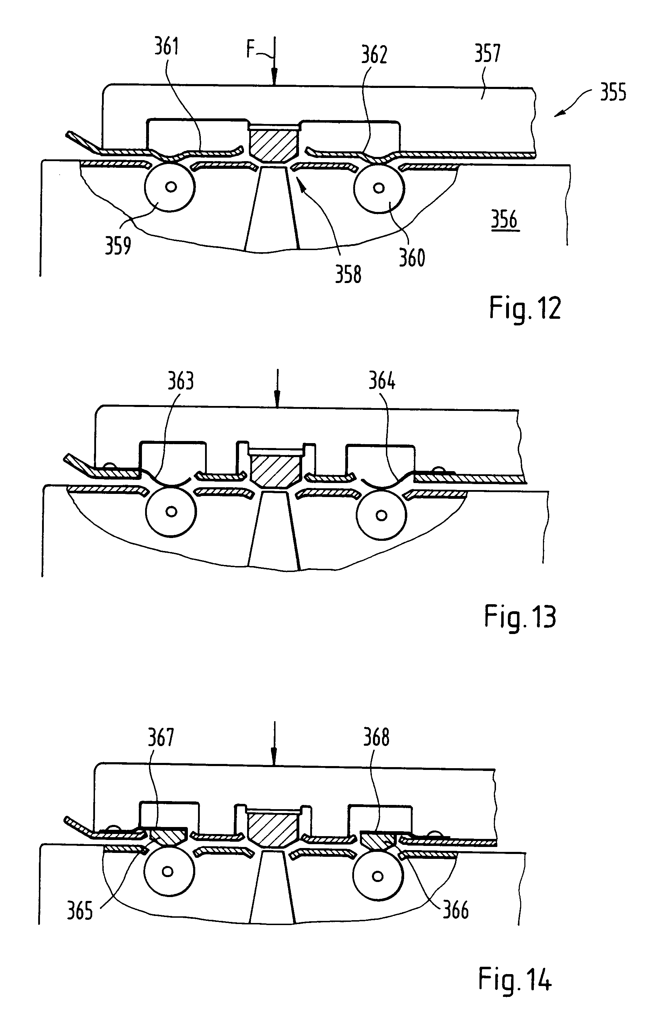

Fig. 12 zeigt schematisch ein Ausführungsbeispiel eines Druckers 355 mit einem unteren Gehäuseteil 356 und einem mit diesem schwenkbar verbundenen Gehäuseaufsatz 357. Im unteren Gehäuseteil 356 sind vor der Druckstation 358 angeordnete, angetriebene Transportrollen 359 sowie hinter der Druckstation angeordnete angetriebene Transportrollen 360 vorgesehen. Die Widerlager für die Transportrollen 359, 360 sind durch verhältnismäßig starre profilierte Blechplatten 361, 362 gebildet. Um eine Anpassung an unterschiedliche Druckträgerdicken zu ermöglichen, ist vorzugsweise eine Dickenausgleichssteuerung etwa der anhand der Fig. 11 beschriebenen Art vorgesehen.

Fig. 13 zeigt einen Drucker etwa gemäß der Fig. 12, wobei jedoch anstelle der starren Blechplatten federnde Bügel 363, 364 vorgesehen sind, die jeweils entsprechend der Dicke des transportierten Druckträgers federnd ausweichen können.

Fig. 14 zeigt ein Ausführungsbeispiel etwa gemäß der Fig. 13, wobei die Druckwiderlager für die Transportrollen durch gesonderte Gleitstücke 365, 366 gebildet sind, die über federnde Haltearme 367, 368 federnd an die Transportrollen angedrückt werden. Diese Anordnung erlaubt es, die Gleitstücke 365, 366 einerseits und die federnden Haltearme 367, 368 andererseits jeweils aus den für die vorgesehenen Aufgaben bestgeeigneten Materialien herzustellen. Bei den Ausführungen der Figuren 13 und 14 ist eine Dickenausgleichssteuerung für den Gehäuseaufsatz nicht erforderlich.

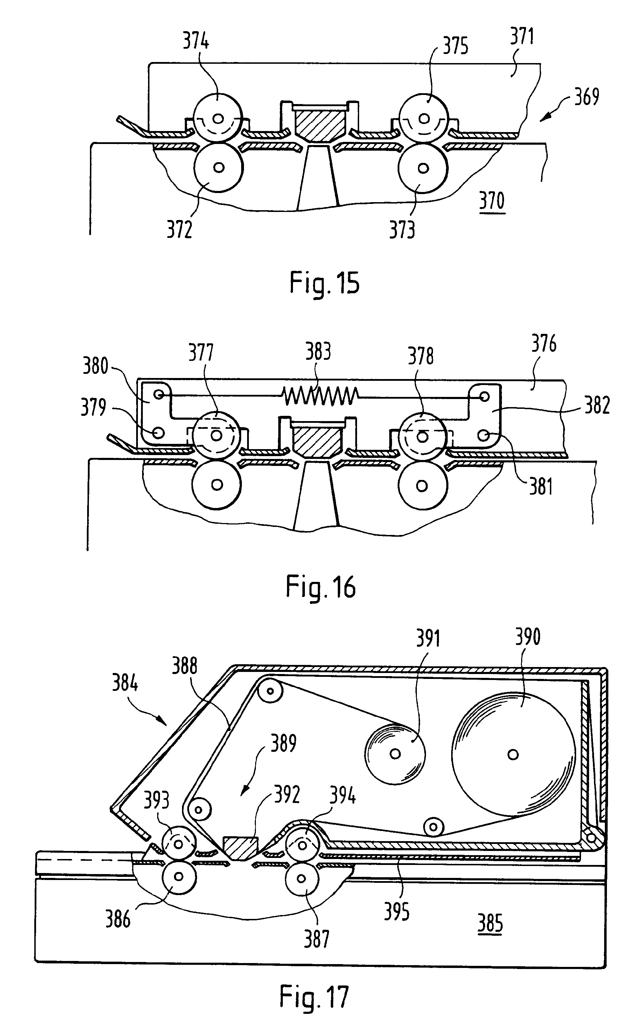

Fig. 15 zeigt schematisch einen Drucker 369 mit einem unteren Gehäuseteil 370 und einem mit diesem schwenkbar verbundenen Gehäuseaufsatz 371. Bei diesem Ausführungsbeispiel sind die Widerlager für die unteren Transportrollen 372, 373 als am Gehäuseaufsatz 371 fest angeordnete, lose mitlaufende obere Transportrollen 374, 375 ausgebildet. Auch bei dieser Anordnung ist vorzugsweise eine Dickenausgleichsvorrichtung etwa der anhand der Fig. 11 beschriebenen Art vorgesehen.

In Fig. 16 ist ein Drucker etwa gemäß Fig. 15 dargestellt, wobei die im Gehäuseaufsatz 376 angeordneten, lose mitlaufenden oberen Transportrollen 377, 378 nicht fest sondern federnd angeordnet sind. Die in Fig. 16 linke Transportrolle 377 ist an einem um den Anlenkpunkt 379 schwenkbar am Gehäuseaufsatz 376 gelagerten Winkelhebel 380 angeordnet; in entsprechender Weise ist die in Fig. 16 rechte obere Transportrolle 378 an dem im Anlenkpunkt 381 schwenkbar mit dem Gehäuseaufsatz 376 verbundenen Winkelhebel 382 angeordnet. Die vertikalen Arme der Winkelhebel 380, 382 sind über eine zwischen diesen angeordnete Zugfeder 383 miteinander verbunden. Dadurch werden die oberen Transportrollen 377, 378 federnd gegen die zugeordneten unteren Transportrollen vorgespannt. Bei dieser Anordnung ist eine Dikkenausgleichsvorrichtung für den Gehäuseaufsatz 376 nicht erforderlich.

Der in Fig. 17 dargestellte Drucker 384 umfaßt ein unteres Gehäuseteil 385, in welchem vordere bzw. hintere untere Transportrollen 386 bzw. 387 angeordnet sind, welche mit einem Transportrollenantrieb verbunden sind. Ein am unteren Gehäuseteil 385 schwenkbar angeordneter Gehäuseaufsatz 388 enthält eine obere Druckstation 389 mit einer Papiervorratsrolle 390 und einer Papieraufwikkelrolle 391. Das Druckwiderlager 392 für den im unteren Gehäuseteil angeordneten, nicht dargestellten Druckkopf ist im Gehäuseaufsatz 388 angeordnet und kann mit diesem abgehoben werden. Die Widerlager für die unteren Transportrollen 386, 387 sind als obere Transportrollen 393, 394 ausgebildet. Gemäß einer Ausgestaltung sind die oberen Transportrollen 393, 394 Bestandteil des unteren Gehäuseteils 385; in diesem Fall sind sie vorzugsweise federnd etwa in der anhand der Fig. 15 beschriebenen Weise angeordnet, so daß sie sich an unterschiedliche Druckträgerdicken anpassen können. In einer anderen Ausgestaltung sind die oberen Transportrollen 393, 394 auf einer eigenen, gegenüber dem unteren Gehäuseteil 385 schwenkbaren Schwinge 395 angeordnet, die getrennt vom Gehäuseaufsatz 388 abschwenkbar ist. In diesem Fall sind vorzugsweise die hinteren Transportrollen 387, 394 in der anhand der Fig. 4 beschriebenen Weise weicher ausgebildet als die vorderen Transportrollen 386, 393, damit ein ordnungsgemäßer gegenseitiger Andruck der vorderen Transportrollen 386, 393 sowie ein ordnungsgemäßer Druckabstand des Druckwiderlagers 392 vom Druckkopf gewährleistet ist, wie bereits beschrieben wurde.

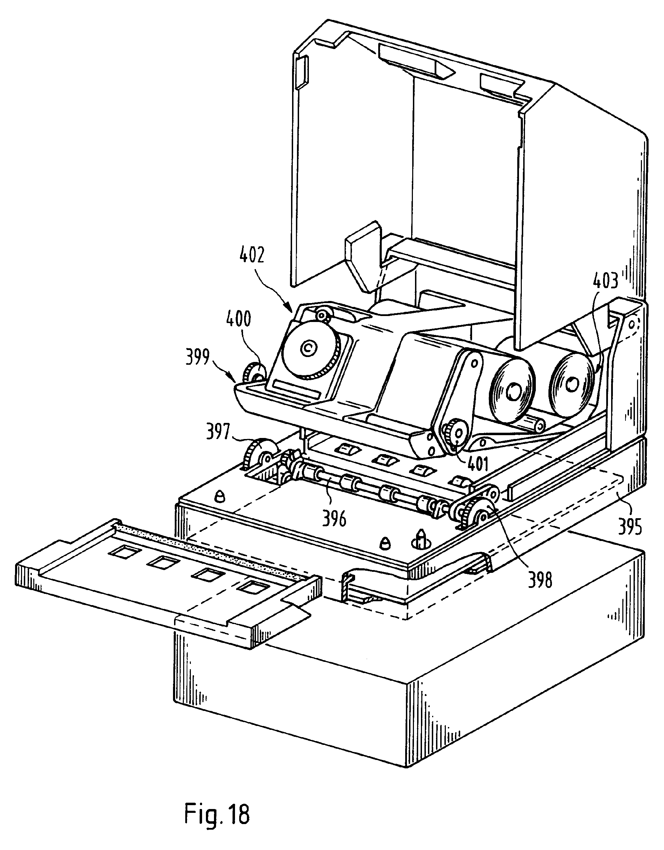

Fig. 18 zeigt einen Drucker etwa gemäß der Fig. 2. Er entspricht diesem weitgehend, so daß er nicht nochmals im einzelnen beschrieben werden muß. Im Unterschied zur Fig. 2 sind an den Enden einer im unteren Gehäuseteil 395 angeordneten Transportrollenachse 396 jeweils Kupplungszahnräder 397, 398 angeordnet, die über die Druckträgerebene nach oben überstehen. Diese kommen bei auf den unteren Gehäuseteil 395 abgeschwenktem Gehäuseaufsatz 399 mit zugeordneten Kupplungszahnrädern 400, 401 in Eingriff. Wie die Fig. 18 erkennen läßt, sind im Gehäuseaufsatz 399 eine Bon-Druckstation 402 sowie eine Journal-Druckstation 403 jeweils mit eigenen Papiertransporteinrichtungen vorgesehen. Das obere Kupplungszahnrad 400 sitzt auf einer Antriebswelle für die Papiertransportvorrichtung der Bon-Druckstation , während das Kupplungszahnrad 401 auf einer Antriebswelle für die Papiertransportvorrichtung der Journal-Druckstation sitzt. Auf diese Weise können alle aktiven Bauteile des Druckers im unteren Gehäuseteil 395 angeordneten, während die Funktionsbauteile des Gehäuseaufsatzes 399 über die beschriebenen Kupplungsmittel mit dem im unteren Gehäuseteil 395 angeordneten Antriebsmechanismus gekuppelt werden.

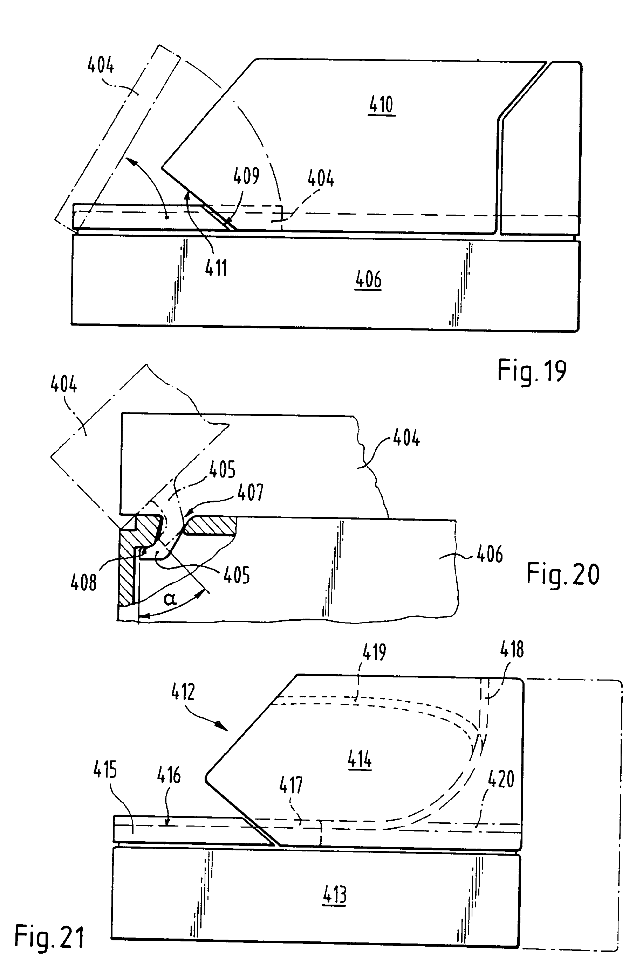

Um sicherzustellen, daß beispielsweise die Farbbandkassette 26 der Fig. 1 zuverlässig in ihrer auf dem unteren Gehäuseteil aufliegenden Betriebsstellung gehalten wird, ist eine Einrichtung gemäß den Figuren 19 und 20 vorgesehen. Wie insbesondere Fig. 20 zeigt, sind im hinteren Bereich der Farbbandkassette 404 an der Unterseite hakenartige Fortsätze 405 angeordnet, die in an der Oberseite des unteren Gehäuseteils 406 ausgebildete Ausnehmungen 407 scharnierartig eingreifen können. Dazu wird die Farbbandkassette 404 in der in Fig. 19 dargestellten Weise mit ihrer Unterkante auf den unteren Gehäuseteil 406 aufgesetzt, wobei die Fortsätze 405 in die Ausnehmungen 407 eingreifen. Durch Kippen der Farbbandkassette 404 nach unten hintergreifen die Fortsätze 405 eine Anlagefläche 408 und verhaken sich in den Ausnehmungen 407. Im vorderen Bereich der Farbbandkassette 404 sind schräg nach vorne und unten gerichtete Anlageflächen 409 ausgebildet (siehe dazu auch beispielsweise die Figuren 1, 3 und 5), gegen die sich beim Abschwenken des Gehäuseaufsatzes 410 eine an diesem ausgebildete untere Schrägfläche 411 anlegt. Dadurch wird die Kassette auch im vorderen Bereich sicher in ihrer Betriebsstellung gehalten.

Bei den bisher beschriebenen Ausführungsbeispielen verläuft der Druckträgertransportkanal vorzugsweise eben entlang der Oberseite des unteren Gehäuseteils. Um auch bei in Transportrichtung verkürztem Drucker eine ausreichende Führung des Druckträgers sicherzustellen, ist die in Fig. 20 dargestellte Ausführung vorgesehen. Der Drucker 412 umfaßt einen unteren Gehäuseteil 413 und einen Gehäuseaufsatz 414. Die Oberseite der auf dem unteren Gehäuseteil 413 aufliegenden Farbbandkassette 415 bildet eine Druckträgerauflage 416. Der in Fortsetzung der Druckträgerauflage 416 sich erstreckende Druckträgertransportkanal 417 ist im hinteren Teil des Druckers 412 nach oben abgebogen; er mündet entweder in die Oberseite des Gehäuseaufsatzes 414, wie der mit 418 bezeichnete Kanalast zeigt, oder in der dem Benutzer zugewandten Vorderseite des Gehäuseaufsatzes 414, wie der mit 419 bezeichnete Kanalast zeigt. In jedem Fall ist der Druckträgertransportkanal länger als es ein geradlinig zur Rückseite des Druckers geführter Transportkanal 420 wäre.

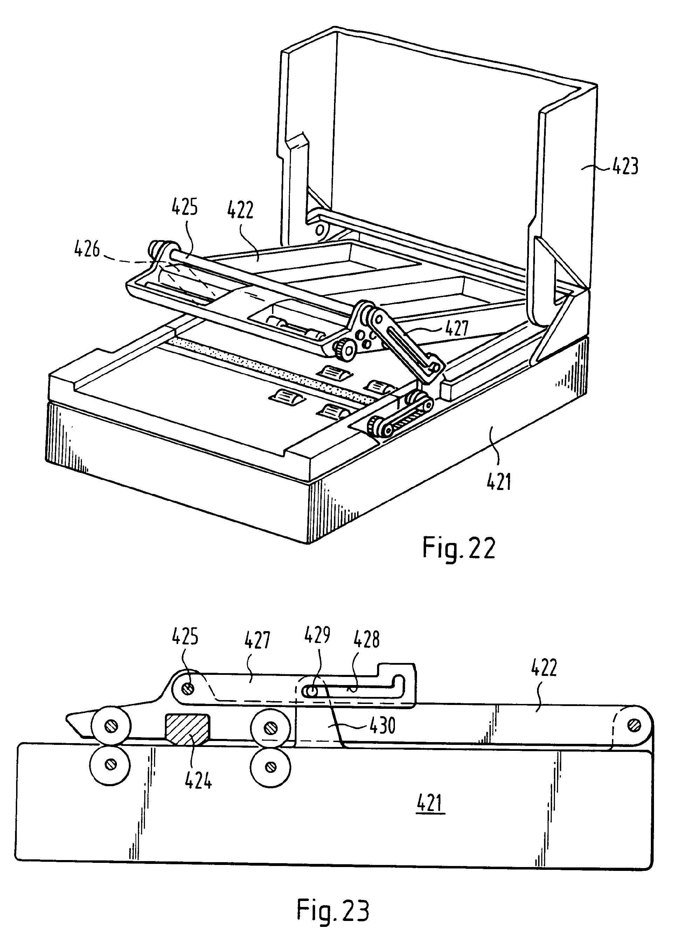

Die Figuren 22 und 23 zeigen einen Drucker etwa der in Fig. 1 dargestellten Art. Er umfaßt einen unteren Gehäuseteil 421 und einen mit diesem schwenkbar verbundenen Gehäuseaufsatz 422. Zusätzlich ist ein Gehäusedekkel 423 vorgesehen. Um bei allen Betriebszuständen eine Parallellage des Gehäuseaufsatzes 422 bezüglich des Gehäuseunterteils 421 und damit eine Parallelstellung des Druckwiderlagers 424 zur Druckträgerebene sicherzustellen, ist die in den Figuren 22 und 23 dargestellte Parallelführung vorgesehen. An den Enden einer am Gehäuseaufsatz 422 zu dessen Schwenkachse parallelen Lenkerachse 425 ist je ein Parallellenker 426, 427 befestigt; beide Parallellenker sind im Aufbau und in der Funktion gleich, so daß im folgenden nur der in Fig. 23 sichtbare Parallellenker 427 beschrieben wird. Er hat eine in Längsrichtung des Parallellenkers verlaufende Führungsnut 428, in die ein Führungsstift 429 eingreift, welcher auf einem mit dem unteren Gehäuseteil 421 verbundenen Bock 430 angeordnet ist. Bei einer Verschwenkung des Gehäuseaufsatzes 422 aus der in Fig. 23 dargestellten abgeschwenkten Lage nach oben verschiebt sich der Führungsschlitz 428 gegenüber dem Führungsstift 429. Da der Parallellenker 427 über die Lenkerachse 425 mit dem Parallellenker 426 fest gekoppelt ist, stellen sich auf der in Fig. 22 linken Seite des Gehäuseaufsatzes stets die gleichen geometrischen Verhältnisse ein wie auf der rechten Seite, so daß der Gehäuseaufsatz 422 bei allen Schwenklagen stets parallel zum unteren Gehäuseteil 421 verbleibt.

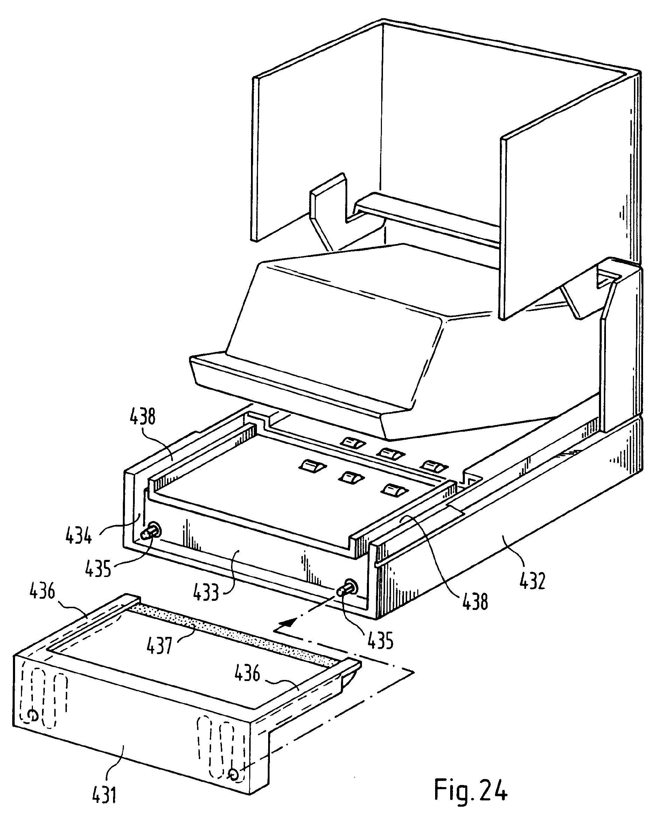

Fig. 24 zeigt eine Anordnung, die im wesentlichen den in den Figuren 1 und 2 dargestellten Anordnungen entspricht. Bei diesen letzteren Ausführungsbeispielen wird die Länge des unteren Gehäuseteils durch die Abmessungen der auf diesem aufzulegenden Farbbandkassette mitbestimmt. Wenn man den unteren Gehäuseteil im vorderen Bereich kürzen will, dann geht gleichzeitig die Auflagefläche für die Farbbandkassette verloren. Fig. 24 zeigt ein Ausführungsbeispiel, bei welchem eine Farbbandkassette 431 vertikal stehend an die vordere Stirnseite 433 des unteren Gehäuseteils 432 angesetzt wird, so daß der untere Gehäuseteil 432 im vorderen Bereich unabhängig von den Abmessungen der Kassette gekürzt werden kann. Dazu ist an der vorderen Stirnseite 433 eine Ausnehmung 434 vorgesehen, in die die Farbbandkassette 431 passend einsetzbar ist. Durch diese als Montageseite dienende vordere Stirnseite 433 greifen Antriebszapfen 435 hindurch, die mit in der Farbbandkassette 431 angeordneten Wickelrollen für das Farbband gekuppelt werden, wenn die Farbbandkassette 431 in ihre Betriebsstellung eingesetzt wird. Die Antriebszapfen 431 sind mit im unteren Gehäuseteil 432 angeordneten Antriebsmitteln verbunden. An der Farbbandkassette 431 sind in Papiertransportrichtung ausgerichtete Führungsarme 436 angeordnet, mittels derer das Farbband 436 bis zur Druckstation geführt und in eine zur Druckträgerebene parallele Lage verdreht wird. Die Führungsarme 436 legen sich bei der Montage der Farbbandkassette 431 in diesen zugeordnete, am unteren Gehäuseteil 432 ausgebildete Aufnahmekanäle 438, so daß die Farbbandkassette 431 bei der Montage sicher geführt und in ihrer Betriebsstellung sicher gehalten wird.

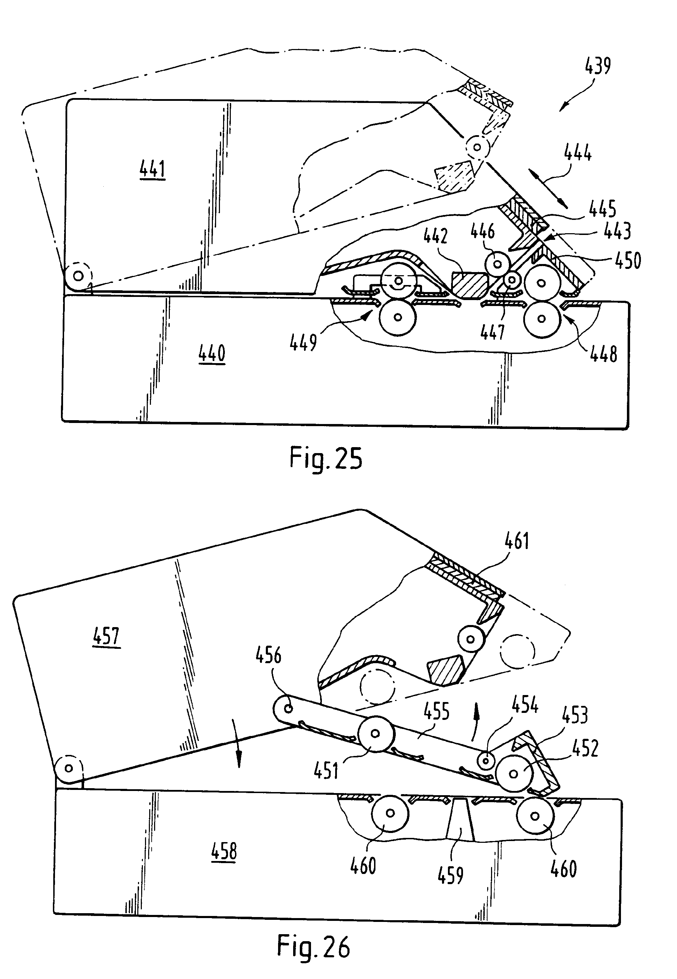

Fig. 25 zeigt einen Drucker 439 mit einem unteren Gehäuseteil 440 und einem an diesem schwenkbar angeordneten Gehäuseaufsatz 441. Der Gehäuseaufsatz 441 nimmt unter anderem eine Bon-Druckstation auf, wie sie beispielsweise in Fig. 2 dargestellt ist. Das Bon-Druckpapier wird von einer im Gehäuseaufsatz 441 angeordneten Vorratsrolle abgewickelt, unter dem Druckwiderlager 442 hindurchgeführt und durch einen Ausgabeschlitz 443 ausgegeben. Ein im Gehäuseaufsatz 441 in Richtung des Doppelpfeiles 444 beweglich gelagertes Schneidmesser 445 wirkt mit einem Gegenmesser 446 in an sich bekannter Weise zusammen und schneidet den jeweils in der Bon-Druckstation bedruckten Bon ab. Für den Transport des Druckpapiers ist ein Transportrollenpaar 446, 447 vorgesehen. Das vor dem Druckwiderlager 442 angeordnete Transportrollenpaar 448 und das hinter dem Druckwiderlager angeordnete Transportrollenpaar 449 dienen in der schon beschriebenen Weise dem Transport eines auf der Oberseite des unteren Gehäuseteils 440 geführten Beleges. Bei dem in Fig. 25 dargestellten Ausführungsbeispiel ist vorgesehen, daß das vordere Transportrollenpaar 448 und das hintere Transportrollenpaar 449 sowie die untere Transportrolle 447 für das Bon-Druckpapier dem unteren Gehäuseteil 440 zugeordnet sind; außerdem ist das Gegenmesser 450 Bestandteil des unteren Gehäuseteils 440. Das Druckwiderlager 442, die obere Transportrolle 446 für das Bon-Druckpapier sowie die Schneideinrichtung mit dem Schneidmesser 445 sind am Gehäuseaufsatz angeordnet. Durch Hochschwenken des Gehäuseaufsatzes 441 wird der Transportweg des Bon-Druckpapieres gut zugänglich, so daß das Einlegen des Druckpapieres erleichtert wird.

Fig. 26 zeigt ein dem Ausführungsbeispiel der Fig. 25 ähnliches Ausführungsbeispiel. Dabei sind jedoch die oberen Transportrollen 451 und 452 zum Transport der Belege, das Gegenmesser 453 und die untere Transportrolle 454 zum Transport des Bon-Druckpapieres an einer gesonderten Schwinge 455 angeordnet, die um die Schwenkachse 456 schwenkbar am Gehäuseaufsatz 457 angeordnet ist. Diese Anordnung ermöglicht einerseits bei der in Fig. 26 dargestellten Lage einen guten Zugang zum Transportweg des Bon-Druckpapieres; bei nach oben geschwenkter Schwinge 455 wird die Oberseite des unteren Gehäuseteils 458 freigelegt, so daß der Transportweg für den Beleg, der Druckkopf 459, die unteren Transportrollen 460 beispielsweise zu Servicezwecken zugänglich werden. Außerdem kann die Schwinge 455 bei hochgeschwenktem Gehäuseaufsatz 457 zu dessen Abstützung und Lagefixierung dienen. Das Schneidmesser 401 mit dem Schneidmesserantrieb ist im Gehäuseaufsatz angeordnet.

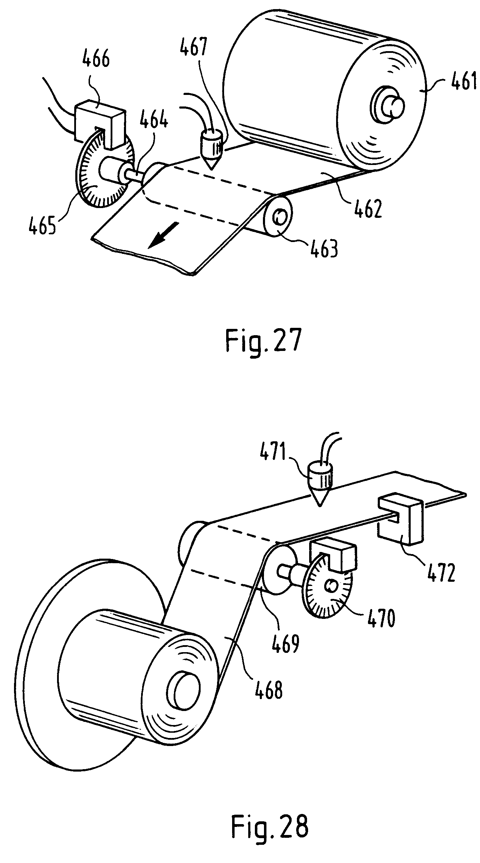

Fig. 27 zeigt eine Einzelheit zur Überwachung des Papiertransportes beispielsweise einer Bon-Druckstation oder einer Journal-Druckstation. Das von der Vorratsrolle 461 ablaufende Papierband 462 läuft über eine Umlenkrolle 463 und versetzt diese in Drehung. Auf einem Ende einer mit der Umlenkrolle 463 verbundenen Rollenachse 464 ist eine Taktscheibe 465 angeordnet, die mit einem Taktsensor 466 zusammenwirkt. Bei laufender Taktscheibe 465 werden im Taktsensor 466 Taktpulse erzeugt, die es ermöglichen, eine Bewegung des Papierbandes 462 und dessen Bewegungsgeschwindigkeit festzustellen. Eine andere Möglichkeit besteht darin, einen optischen Bewegungsgeber 467 auf die Papierbahn 462 zu richten. Bei ordnungsgemäßem Papiertransport gibt der optische Bewegungsgeber 467 ein definiertes Rauschsignal an die Steuerung.

Fig. 28 zeigt eine ähnliche Anordnung wie Fig. 27, mit einer von der Papierbahn 468 über die Umlenkrolle 469 angetriebene Taktscheibe 470 und mit einem optischen Bewegungsgeber 471; beide Einrichtungen können nebeneinander oder alternativ verwendet werden. Zusätzlich ist ein beispielsweise als Gabellichtschranke ausgebildeter Papierendemelder 472 vorgesehen, welcher anspricht, wenn keine Papierbahn mehr durch diesen hindurchgeführt wird.

Die Papierbewegungsmelder bzw. der Papierendemelder geben ihre Signale an eine zentrale Steuerung, die bei Abweichungen vom Normalbetrieb entsprechende Fehlermeldungen ausgibt oder Fehleroperationen durchführt.

## Patentansprüche

1. Drucker (2) mit wenigstens einer Druckstation, umfassend ein in einer Druckträgerebene geteiltes Drukkergehäuse mit einem unteren Gehäuseteil (4) und einem auf das untere Gehäuseteil aufsetzbaren bzw. von diesem abhebbaren Gehäuseaufsatz (6), wobei das untere Gehäuseteil (4) eine erste Gruppe von Funktionsbauteilen mit einem in Druckzeilenrichtung verfahrbaren Druckkopf (14), unteren, mit Transportrollen-Widerlagern zusammenwirkenden Druckträger-Transportrollen (16) und einer Farbbandanlage (30,26), jeweils mit ihren Antriebseinrichtungen, aufnimmt und im oberen Gehäuseaufsatz (6) eine zweite Gruppe von Funktionsbauteilen mit einem Druckwiderlager (22) für den Druckkopf (14), dadurch **gekennzeichnet**, daß nur eine in der Teilungsebene liegende Druckträgerebene und ein dieser Druckträgerebene zugeordneter Druckkopf (14) vorgesehen ist, daß im unteren Gehäuseteil (4) die Antriebs- und Steuerungselektronik (34) untergebracht ist, mit der alle elektrischen und elektronischen Funktionsbauteile des Druckers (2) elektrisch verbunden sind und daß eine ein Farbband (30) aufnehmende Farbbandkassette (26) im vorderen Bereich des unteren Gehäuseteils (4) so montierbar ist, daß ihre oberen Begrenzungsflächen mit der Druckträgerebene bündig sind, wobei in der Farbbandkassette (26) angeordnete Transportrollen mit wenigstens einem durch die Montagefläche (18a) für die Farbbandkassette (26) hindurchragenden Antriebszapfen (20) gekuppelt werden.

2. Drucker nach Anspruch 1, dadurch **gekennzeichnet**, daß die Antriebs- und Steuerungsmodulanordnung (34) als über dem Boden (32) des unteren Gehäuseteils (4) angeordnete flache Schaltungsplatine (34) ausgebildet ist, auf der die zugeordneten Funktionsbauteile entsprechend ihren vorgesehenen räumlichen Anordnungen montiert sind.

3. Drucker nach Anspruch 1 oder 2, dadurch **gekennzeichnet**, daß die Oberseite des unteren Gehäuseteils (4) durch eine im wesentlichen in der Druckträgerebene liegende Deckplatte (18) gebildet ist, die einen vertieften Bereich (18a) zur Aufnahme der flach mit einer zur Druckträgerebene bündigen Oberseite in den vertieften Bereich einlegbaren Farbbandkassette (26) aufweist und die mit Durchbrechungen (38) für den Druckkopf (14), für in Einzugsrichtung (8) des Druckträgers vor bzw. hinter dem Druckkopf liegende Transportrollen (16), gegebenenfalls für Kupplungsmittel für den Kupplungseingriff mit im Gehäuseaufsatz befindlichen Kupplungsmitteln zum Antrieb von im Gehäuseaufsatz angeordneten Funktionsbauteilen sowie für wenigstens einen Antriebszapfen (20) für die Farbbandkassette (26) versehen ist.

4. Drucker nach Anspruch 3, dadurch **gekennzeichnet**, daß die Durchbrechung (38) für den Druckkopf (14) in einem in Einzugsrichtung (8) hinteren, durch die eingelegte Farbbandkassette (26) nicht abgedeckten Bereich des vertieften Bereiches (18a) angeordnet ist.

5. Drucker nach Anspruch 3 oder 4, dadurch **gekennzeichnet**, daß die Durchbrechungen (38) für die in Einzugsrichtung (8) vor dem Druckkopf (14) liegenden Transportrollen (16) in einem durch die eingelegte Farbbandkassette (26) abgedeckten Teil des vertieften Bereiches (18a) angeordnet sind und daß die Farbbandkassette (26) ihrerseits mit Durchbrechungen (40) für den Durchtritt dieser Transportrollen (16) versehen ist.

6. Drucker nach einem der Ansprüche 3 bis 5, dadurch **gekennzeichnet**, daß die Farbbandkassette (26) mit bezüglich der Einzugsrichtung (8) des Druckträgers seitlichen Führungsstegen (26a, 26b) für die Seitenführung des Druckträgers versehen ist.

7. Drucker nach einem der Ansprüche 1 bis 5, dadurch **gekennzeichnet**, daß der Gehäuseaufsatz (6) um eine quer zur Einzugsrichtung (8) des Druckträgers und parallel zur Druckträgerebene liegende Schwenkachse (10) schwenkbar mit dem unteren Gehäuseteil (4) verbunden ist.

8. Drucker nach einem der Ansprüche 1 bis 7, dadurch **gekennzeichnet**, daß der Gehäuseaufsatz (106) zur Aufnahme zusätzlicher Druckstationen (150, 152) ausgelegt ist, die jeweils eine Papiervorratsrolle (154, 160) sowie eine Papiertransporteinrichtung mit Transportrollen (224; 231) und Transportantrieb (222; 228) für den Transport des Papiers (156, 161) von der Papiervorratsrolle (154, 160) entlang dem Druckwiderlager (122) umfassen.

9. Drucker nach Anspruch 8, dadurch **gekennzeichnet**, daß eine (150) der zusätzlichen Druckstationen als Journaldruckstation ausgebildet ist und eine mit der Papiertransporteinrichtung verbundene, in Transportrichtung des Papiers (156) hinter dem Druckwiderlager (122) angeordnete, angetriebene Aufwickelrolle (158) umfaßt.

10. Drucker nach Anspruch 8 oder 9, dadurch **gekennzeichnet**, daß eine (152) der zusätzlichen Druckstationen als Bon-Druckstation ausgebildet ist und eine mit einem Antrieb (165) verbundene, in Transportrichtung des Papiers (161) hinter dem Druckwiderlager (122) angeordnete Abschneideeinrichtung (164, 165) umfaßt.

11. Drucker nach einem der Ansprüche 1 bis 10, dadurch **gekennzeichnet**, daß der Boden (32) des unteren Gehäuseteils (4) abnehmbar und durch ein Erweiterungsgehäuse (240) zur Aufnahme von zusätzlichen elektrischen und/oder elektronischen Bauteilen ersetzbar ist, die mit der Antriebs- und Steuerungsmodulanordnung (34) verbindbar sind.

12. Drucker nach Anspruch 11, dadurch **gekennzeichnet**, daß das Erweiterungsgehäuse (240) die Elektronikausrüstung eines PC aufnimmt, an die Peripheriegeräte wie Tastatur, Display, Diskettenlaufwerke, anschließbar sind.

13. Drucker nach Anspruch 11, dadurch **gekennzeichnet**, daß das Erweiterungsgehäuse (240) eine kassenspezifische Elektronikausrüstung zur Ansteuerung von Kassengeräten aufnimmt.

14. Drucker nach einem der Ansprüche 7 bis 12, dadurch **gekennzeichnet**, daß der Gehäuseaufsatz (106) durch Federmittel (110) in die auf dem unteren Gehäuseteil (104) aufliegende Stellung vorbelastet ist.

15. Drucker nach einem der Ansprüche 7 bis 14, mit im Gehäuseaufsatz angeordneten, mit den unteren Transportrollen zusammenwirkenden oberen Transportrollen, dadurch **gekennzeichnet**, daß die in Einzugsrichtung (8) des Druckterägers hinter dem Druckkopf (114) liegenden unteren (116) und/oder oberen (214) Transportrollen weicher als die vor dem Druckkopf liegenden Transportrollen sind.

16. Drucker nach einem der Ansprüche 7 bis 14, dadurch **gekennzeichnet**, daß der obere Gehäuseaufsatz (303) eine von der Druckträgerdicke unabhängige, auf dem unteren Gehäuseteil (302) aufliegende Betriebsstellung hat, und daß die oberen Transportrollen (306, 307) und das Druckwiderlager (305) an einem bei dieser Betriebsstellung im wesentlichen senkrecht zur Druckträgerebene verstellbaren, durch Federmittel (311) zur Druckträgerebene hin vorbelasteten Träger (308) angeordnet sind.

17. Drucker nach Anspruch 16, dadurch **gekennzeichnet**, daß der Träger (308) über eine Gelenkschere am Gehäusaufsatz angeordnet ist.

18. Drucker nach Anspruch 16, dadurch **gekennzeichnet**, daß der Träger (319) über eine Parallellenkeranordnung (320) mit dem Gehäuseaufsatz (314) verbunden ist.

19. Drucker nach Anspruch 16, dadurch **gekennzeichnet**, daß der Träger (338) über eine Längsführung (343, 344) mit dem Gehäuseaufsatz (341) verbunden ist.

20. Drucker nach einem der Ansprüche 1 bis 14, dadurch **gekennzeichnet**, daß die oberen Transportrollen (377, 378) in einer bei der auf dem unteren Gehäuseteil aufliegenden Betriebsstellung des Gehäuseaufsatzes (376) im wesentlichen senkrecht zur Druckträgerebene beweglich am Gehäuseaufsatz (376) gelagert und durch Federmittel (383) zur Druckträgerebene hin vorgespannt sind.

21. Drucker nach einem der Ansprüche 8 bis 20, dadurch **gekennzeichnet**, daß die Antriebe für die Papiertransporteinrichtungen der im Gehäuseaufsatz (399) angeordneten zusätzlichen Druckstationen (402, 403) mit diesen Papiertransporteinrichtungen verbundene obere Kupplungsmittel (400, 401) umfassen, die bei der auf dem unteren Gehäuseteil (395) aufliegenden Gehäuseaufsatz (399) mit im unteren Gehäuseteil angeordneten und mit einem Antriebsmotor verbundenen unteren Kupplungsmitteln (397, 398) in Kupplungseingriff gelangen.

22. Drucker nach Anspruch 22, dadurch **gekennzeichnet**, daß die oberen (400, 401) und unteren (397, 398) Kupplungsmittel jeweils durch bei abgehobenem Gehäuseaufsatz (399) außer Eingriff und bei aufliegendem Gehäuseaufsatz (399) in Eingriff befindliche Zahnräder gebildet sind.

23. Drucker nach einem der Ansprüche 3 bis 22, dadurch **gekennzeichnet**, daß an der oberen Vorderkante des unteren Gehäuseteils (406) einerseits und an der dieser Vorderkante zugeordneten Unterkante der auf den unteren Gehäuseteil aufgelegten Farbbandkassette (404) andererseits Scharniermittel (405, 407, 408) vorgesehen sind, die bei einer gegenüber der Oberseite des unteren Gehäuseteils (406) hochgeschwenkten Stellung der Farbbandkassette (404) miteinander in Eingriff bringbar bzw. voneinander lösbar sind und bei einer auf die Oberseite herabgeschwenkten Stellung der Farbbandkassette (404) unlösbar miteinander verbunden sind.

24. Drucker nach einem der Ansprüche 3 bis 23, dadurch **gekennzeichnet**, daß am Drucker Mittel (411) zum Niederhalten des in Einzugsrichtung vorderen Endes der Farbbandkassette (404) vorgesehen sind.

25. Drucker nach Anspruch 24, dadurch **gekennzeichnet**, daß am Gehäuseaufsatz (410) Niederhalteflächen (411) vorgesehen sind, die bei auf dem unteren Gehäuseteil (406) aufliegender Stellung des Gehäuseaufsatzes (410) an Gegenflächen (409) einer auf dem unteren Gehäuseteil aufliegenden Farbbandkassette (404) zur Anlage kommen.

26. Drucker nach einem der Ansprüche 1 bis 14, sowie 21 bis 25, dadurch **gekennzeichnet**, daß die Transportrollen-Widerlager als im unteren Gehäuseteil (385) ortsfest angeordnete, starr oder federnd gelagerte obere Transportrollen (393, 394) ausgebildet sind.

27. Drucker nach einem der Ansprüche 1 bis 14, sowie 21 bis 25, dadurch **gekennzeichnet**, daß die Transportrollen-Widerlager als im Gehäuseaufsatz ortsfest angeordnete, starr oder federnd gelagerte Gleitstücke (361, 362; 365, 366) ausgebildet sind.

28. Drucker nach einem der Ansprüche 7 bis 14 sowie 21 bis 25, dadurch **gekennzeichnet**, daß die Transportrollen-Widerlager als auf einer eigenen, zwischen dem Gehäuseunterteil (385) und dem Gehäuseaufsatz (388) angeordneten, um die Schwenkachse des Gehäuseaufsatzes (388) schwenkbaren Schwinge (395) angeordnete obere Transportrollen (393, 394) ausgebildet sind.

29. Drucker nach einem der Ansprüche 7 bis 28, dadurch **gekennzeichnet**, daß in dem der Schwenkachse des Gehäuseaufsatzes (422) fernen Endbereich des Gehäuseaufsatzes (422) eine zw Schwenkachse parallele Lenkerachse (425)diehbar gelagert ist, und daß an den beiden Enden der Lenkerachse (425) je ein Parallellenker (426, 427) mit einer in dessen Längsrichtung verlaufenden Führungsnut (428) für den Eingriff je eines am Gehäuseunterteil angeordneten Führungsstiftes (429) befestigt ist.

30. Drucker nach einem der Ansprüche 1 bis 29, dadurch **gekennzeichnet**, daß der Gehäuseaufsatz (414) einen Druckträger-Führungskanal hat, welcher einen ersten, in Verlängerung der Druckträgerebene ausgerichteten Einlaufabschnitt (417) und einen daran anschließenden, aus der Richtung des Einlaufabschnittes ausgebogenen Auslaufabschnitt (418, 419) hat.

31. Drucker nach einem der Ansprüche 1 bis 30, dadurch **gekennzeichnet**, daß die vordere Stirnseite des unteren Gehäuseteils (432) als Montagefläche (433) für den Band aufnahmeteil einer Farbbandkassette (431) ausgebildet ist, an welche mit der Druckträgerebene bündige Führungen (436) für den außerhalb der Farbbandkassette verlaufenden Farbbandabschnitt (437) vorgesehen sind, welche das Farbband zwischen Druckkopf und Druckwiderlager leiten.

32. Drucker nach einem der Ansprüche 8 bis 31, dadurch **gekennzeichnet**, daß Papierbewegungsmelder (465, 466; 467) vorgesehen sind, welche eine Transportbewegung des Druckpapiers (462) der Druckstationen zur Weitergabe an eine Druckersteuerung feststellen.

33. Drucker nach Anspruch 32, dadurch **gekennzeichnet**, daß den die Papiervorratsrollen oder die Papieraufwickelrolle tragenden Rollenachsen bzw. einer vom transportierten Papier (462) mitgenommenen Führungsrolle (463) eine mit diesen umlaufende Taktscheibe (465) zugeordnet ist, deren Drehung von einem Taktsensor (466) aufgenommen wird.

34. Drucker nach einem der Ansprüche 8 bis 33, dadurch **gekennzeichnet**, daß der Vorratsrolle (468) einer Druckstation ein das Papierende feststellender Detektor (472) nachgeordnet ist.

35. Drucker nach einem der Ansprüche 10 bis 34, dadurch **gekennzeichnet**, daß ein Austrittsschlitz (443) für den Austritt einer Bon-Papierbahn in einer Trennfuge zwischen Gehäuseaufsatz (441) und einem relativ zu diesem abschwenkbaren Gehäuseteil (440) ausgebildet ist, und daß die Abschneideeinrichtung (439) ein im Gehäuseaufsatz (441) oder dem abschwenkbaren Gehäuseteil bewegliches Schneidmesser (445) und ein am jeweils anderen Bauteil (440) fest angeordnetes Gegenmesser (450) umfaßt.

36. Drucker nach Anspruch 35, dadurch **gekennzeichnet**, daß das Schneidmesser (445) im Gehäuseaufsatz (441) und das Gegenmesser (450) im unteren Gehäuseteil (440) angeordnet ist.

37. Drucker nach Anspruch 35, dadurch **gekennzeichnet**, daß das Schneidmesser (461) im Gehäuseaufsatz (457) und das Gegenmesser (453) an einer an diesem schwenkbar angeordneten, auch obere Transportrollen (451, 452) tragenden, nach unten abschwenkbaren Schwinge (455) angeordnet ist.

## Claims

1. Printer (2) having at least one printing station, comprising a printer housing divided in a print carrier plane, with a lower housing part (4) and a housing cover (6) which can be placed on the lower housing part or lifted off the latter, the lower housing part (4) receiving a first group of functional components with a printing head (14) which can travel in the print line direction, lower print carrier transport rollers (16), interacting with transport roller abutments, and an ink ribbon system (30, 26), in each case with their drive devices, and in the upper housing cover (6) a second group of functional components with a printing abutment (22) for the printing head (14), characterised in that there is provided only one print carrier plane, lying in the dividing plane, and one printing head (14) assigned to this print carrier plane, in that the drive and control electronics (34) are accommodated in the lower housing part (4), to which all the electrical and electronic functional components of the printer (2) are electrically connected and in that an ink ribbon cassette (26), receiving an ink ribbon (30), can be installed in the front region of the lower housing part (4) in such a way that its upper bounding surfaces are flush with the print carrier plane, transport rollers arranged in the ink ribbon cassette (26) being coupled to at least one drive pin (20), protruding through the installation surface (18a) for the ink ribbon cassette (26).

2. Printer according to Claim 1, characterised in that the drive and control module arrangement (34) is designed as a flat circuit board (34) which is arranged over the bottom (32) of the lower housing part (4) and on which the assigned functional components are installed corresponding to their intended spatial arrangements.

3. Printer according to Claim 1 or 2, characterised in that the upper side of the lower housing part (4) is formed by a top plate (18) which lies essentially in the print carrier plane and has a depressed region (18a) for receiving the ink ribbon cassette (26), which can be laid flat into the depressed region with an upper side flush with the print carrier plane and which is provided with clearances (38) for the printing head (14), for transport rollers (16) lying ahead and behind the printing head in the feeding direction (8) of the print carrier, if appropriate for coupling means for the coupling engagement with coupling means located in the housing cover, for driving functional components arranged in the housing cover, as well as for at least one drive pin (20) for the ink ribbon cassette (26).

4. Printer according to Claim 3, characterised in that the clearance (38) for the printing head (14) is arranged in a rear region, in the feeding direction (8), of the depressed region (18a), not covered by the inserted ink ribbon cassette (26).

5. Printer according to Claim 3 or 4, characterised in that the clearances (38) for the transport rollers (16) lying ahead of the printing head (14) in the feeding direction (8) are arranged in a part of the depressed region (18a) covered by the inserted ink ribbon cassette (26) and in that the ink ribbon cassette (26) for its part is provided with clearances (40) for the passage of these transport rollers (16).

6. Printer according to one of Claims 3 to 5, characterised in that the ink ribbon cassette (26) is provided with guide webs (26a, 26b) at the sides with respect to the feeding direction (8) of the print carrier, for the lateral guidance of the print carrier.

7. Printer according to one of Claims 1 to 5, characterised in that the housing cover (6) is connected to the lower housing part (4) pivotably about a pivot axis (10) lying transversely to the feeding direction (8) of the print carrier and parallel to the print carrier plane.

8. Printer according to one of Claims 1 to 7, characterised in that the housing cover (106) is designed for receiving additional printing stations (150, 152), which in each case comprise a paper supply roller (154, 160) as well as a paper transport device with transport rollers (224; 231) and transport drive (222; 228) for the transport of the paper (156, 161) from the paper supply roller (154, 160) along the printing abutment (122).

9. Printer according to Claim 8, characterised in that one (150) of the additional printing stations is designed as a day-book printing station and comprises a driven take-up roller (158) which is connected to the paper transport device and arranged behind the printing abutment (122) in the transporting direction of the paper (156).

10. Printer according to Claim 8 or 9, characterised in that one (152) of the additional printing stations is designed as a receipt printing station and comprises a cutting-off device (164, 165) which is connected to a drive (165) and is arranged behind the printing abutment (122) in the transporting direction of the paper (161).

11. Printer according to one of Claims 1 to 10, characterised in that the bottom (32) of the lower housing part (4) is removable and can be replaced by an add-on housing (240) for receiving additional electrical and/or electronic components, which can be connected to the drive and control module arrangement (34).

12. Printer according to Claim 11, characterised in that the add-on housing (240) receives the electronic equipment of a PC, to which peripheral devices, such as a keyboard, display, floppy disk drives, can be connected.

13. Printer according to Claim 11, characterised in that the add-on housing (240) receives till-specific electronic equipment for driving cash-till devices.

14. Printer according to one of Claims 7 to 12, characterised in that the housing cover (106) is preloaded by spring means (110) into the position lying on the lower housing part (104).

15. Printer according to one of Claims 7 to 14, with upper transport rollers arranged in the housing cover and interacting with the lower transport rollers, characterised in that the lower (116) and/or upper (214) transport rollers lying behind the printing head (114) in the feeding direction (8) of the print carrier are softer than the transport rollers lying ahead of the printing head.

16. Printer according to one of Claims 7 to 14, characterised in that the upper housing cover (303) has an operating position lying on the lower housing part (302) which is irrespective of the print carrier thickness, and in that the upper transport rollers (306, 307) and the printing abutment (305) are arranged on a carrier (308) which, in this operating position, is adjustable essentially perpendicularly to the print carrier plane and is preloaded by spring means (311) towards the print carrier plane.

17. Printer according to Claim 16, characterised in that the carrier (308) is arranged on the housing cover by means of an articulated scissors arrangement.

18. Printer according to Claim 16, characterised in that the carrier (319) is connected to the housing cover (314) by means of a parallel link arrangement (320).

19. Printer according to Claim 16, characterised in that the carrier (338) is connected to the housing cover (341) by means of a longitudinal guide (343, 344).

20. Printer according to one of Claims 1 to 14, characterised in that the upper transport rollers (377, 378) are mounted on the housing cover (376) so as to be movable essentially perpendicularly to the print carrier plane in the operating position of the housing cover (376), lying on the lower housing part, and are pretensioned by spring means (383) towards the print carrier plane.

21. Printer according to one of Claims 8 to 2 0, characterised in that the drives for the paper transport devices of the additional printing stations (402, 403) arranged in the housing cover (399) comprise upper coupling means (400, 401) which are connected to these paper transport devices and, with the housing cover (399) lying on the lower housing part (395), enter into coupling engagement with lower coupling means (397, 398) arranged in the lower housing part and connected to a drive motor.

22. Printer according to Claim 22, characterised in that the upper (400, 401) and lower (397, 398) coupling means are respectively formed by gear wheels which are out of engagement with the housing cover (399) lifted off and in engagement with the housing cover (399) lying down.

23. Printer according to one of Claims 3 to 22, characterised in that on the upper front edge of the lower housing part (406) on the one hand and on the lower edge, assigned to this front edge, of the ink ribbon cassette (404) laid on the lower housing part on the other hand there are provided hinging means (405, 407, 408) , which can be brought into engagement with one another and can be released from one another in the case of a position of the ink ribbon cassette (404) pivoted up with respect to the upper side of the lower housing part (406) and are connected unreleasbly to one another in the case of a position of the ink ribbon cassette (404) pivoted down onto the upper side.

24. Printer according to one of Claims 3 to 23, characterised in that means (411) for holding down the front end of the ink ribbon cassette (404), in the feeding direction, are provided on the printer.

25. Printer according to Claim 24, characterised in that on the housing cover (410) there are provided holding-down surfaces (411) which, in the case of the position of the housing cover (410) lying on the lower housing part (406), come into contact with counter-surfaces (409) of an ink ribbon cassette (404) lying on the lower housing part.

26. Printer according to one of Claims 1 to 14, as well as 21 to 25, characterised in that the transport roller abutments are designed as upper transport rollers (393, 394) fixedly arranged in the lower housing part (385) and rigidly or resiliently mounted.

27. Printer according to one of Claims 1 to 14, as well as 21 to 25, characterised in that the transport roller abutments are designed as sliding pieces (361, 362; 365, 366) fixedly arranged in the housing cover and rigidly or resiliently mounted.

28. Printer according to one of Claims 7 to 14, as well as 21 to 25, characterised in that the transport roller abutments are designed as upper transport rollers (393, 394) arranged on an independent rocker (395) which is arranged between the lower housing part (385) and the housing cover (388) and is pivotable about the pivot axis of the housing cover (388).

29. Printer according to one of Claims 7 to 28, characterised in that a link spindle (425), parallel to the pivot axis, is rotatably mounted in the end region of the housing cover (422) remote from the pivot axis of the housing cover (422), and in that at each of the two ends of the link spindle (425) there is fastened a parallel link (426, 427) having a guide groove (428), running in its longitudinal direction, for the engagement of in each case a guide pin (429) arranged on the housing lower part.

30. Printer according to one of Claims 1 to 29, characterised in that the housing cover (414) has a print carrier guide channel, which has a first run-in section (417), aligned in extension of the print carrier plane, and a run-out section (418, 419), adjoining and bent out of the direction of the run-in section.

31. Printer according to one of Claims 1 to 30, characterised in that the front end face of the lower housing part (432) is designed as an installation surface (433) for the tape receiving part of an ink ribbon cassette (431), on which guides (436) flush with the print carrier plane are provided for the ink ribbon section (437) running outside the ink ribbon cassette and guide the ink ribbon between printing head and printing abutment.

32. Printer according to one of Claims 8 to 31, characterised in that paper movement indicators (465, 466; 467) are provided, which detect a transporting movement of the printing paper (462) of the printing stations for passing on to a printer control.

33. Printer according to Claim 32, characterised in that the roller spindles carrying the paper supply rollers or the paper take-up roller, or a guide roller (463) taken along by the transported paper (462) are assigned a timing disk (465) rotating with them, the rotation of which is recorded by a timing sensor (466).

34. Printer according to one of Claims 8 to 33, characterised in that the supply roller (468) of a printing station is followed by a detector (472) detecting the end of the paper.

35. Printer according to one of Claims 10 to 34, characterised in that an outlet slot (443) for the outlet of a receipt paper strip is formed in a separating joint between housing cover (441) and a housing part (440) which can be pivoted down in relation to the latter, and in that the cutting-off device (439) comprises a cutting knife (445), which is movable in the housing cover (441) or the housing part which can be pivoted down, and a counter-knife (450), which is fixedly arranged on what is respectively the other part (440).

36. Printer according to Claim 35, characterised in that the cutting knife (445) is arranged in the housing cover (441) and the counter-knife (450) is arranged in the lower housing part (440).

37. Printer according to Claim 35, characterised in that the cutting knife (461) is arranged in the housing cover (457) and the counter-knife (453) is arranged on a rocker (455) which is pivotably arranged on said housing cover, also bears upper transport rollers (451, 452) and can be pivoted downwards.

## Revendications

1. Imprimante (2) possédant au moins un poste d'impression, qui comprend un boîtier d'imprimante subdivisé dans un plan du support d'impression et comprenant une partie inférieure (4) et un couvercle (G) pouvant être appliqué sur la partie inférieure du boîtier ou en être écarté, et dans laquelle la partie inférieure (4) du boîtier loge un premier groupe de composants fonctionnels comportant une tête d'impression (14) déplaçable dans la direction des lignes d'impression, des rouleaux de transport inférieurs (16) du support d'impression, qui coopèrent avec des contre-appuis pour ces rouleaux de transport, et un agencement (30,26) à ruban encreur, avec leurs dispositifs d'entraînement respectifs, et dans le capot supérieur (6) du boîtier il est prévu un second groupe de composants fonctionnels pourvus d'un contre-appui d'impression (22) pour la tête d'impression (14), caractérisée par le fait qu'il est prévu un seul plan pour le support d'impression, situé dans le plan de division et qu'il est prévu une tête d'impression (14), qui est associée à ce plan du support d'impression, et que dans la partie inférieure (4) du boîtier est logé le système électronique d'entraînement et de commande (34), auquel sont raccordés électriquement tous les composants fonctionnels électriques et électroniques de l'imprimante (2), et qu'une cassette à ruban encreur (26), qui reçoit un ruban encreur (30), est montée dans la zone avant de la partie inférieure (4) du boîtier de sorte que ses surfaces limites supérieures sont de niveau avec le plan du support d'impression, auquel cas des rouleaux de transport disposés dans la cassette à ruban encreur (26) sont accouplés à au moins un tourillon d'entraînement (20), qui traverse la surface de montage (18a) prévue pour la cassette à ruban encreur (26).

2. Imprimante suivant la revendication 1, caractérisée par le fait que le dispositif (34) des modules d'entraînement et de commande est agencé sous la forme d'une platine plate de circuits (34), qui est disposée au-dessus du fond (32) de la partie inférieure (4) du boîtier et sur laquelle les composants fonctionnels associés sont montés conformément à leurs dispositions spatiales prévues.

3. Imprimante suivant la revendication 1 ou 2, caractérisée par le fait que la face supérieure de la partie inférieure (4) du boîtier est formée par une plaque de revêtement (18), qui est située sensiblement dans le plan du support d'impression et qui possède une zone en renfoncement (18a) servant à loger la cassette à ruban encreur (26) qui peut être insérée à plat dans la zone de renfoncement avec une face se terminant de niveau dans le plan du support d'impression, et qui comporte des passages (38) pour la tête d'impression (14), pour des rouleaux de transport (16) situés en avant et en arrière de la tête d'impression par rapport à la direction d'introduction (8) du support d'impression, et éventuellement pour des moyens d'accouplement, pour l'accouplement avec des moyens d'accouplement, situés dans le capot du boîtier, pour l'entraînement de composants fonctionnels disposés dans le capot du boîtier, ainsi que pour au moins un téton d'entraînement (20) pour la cassette à ruban encreur.

4. Imprimante suivant la revendication 3, caractérisé par le fait que le passage (38) pour la tête d'impression (14) est disposé dans une partie de la zone en renfoncement (18a), qui est située en arrière dans la direction d'entrée (8) et n'est pas masquée par la cassette à ruban encreur (26) insérée.

5. Imprimante suivant la revendication 3 ou 4, caractérisée par le fait que les passages (38) pour les rouleaux de transport (16) situés en avant de la tête d'impression (14) dans la direction d'introduction (8), sont disposés dans une partie, qui est masquée par la cassette à ruban encreur (26) insérée, de la zone en renfoncement (18a) et que la cassette à ruban encreur (26) comporte pour sa part des ouvertures (40) pour le passage de ces rouleaux de transport (16).

6. Imprimante suivant l'une revendications 3 à 5, caractérisée par le fait que la cassette à ruban encreur (26) comporte des barrettes de guidage (26a,26b), qui sont disposées latéralement par rapport à la direction d'introduction (8) du support d'impression, pour le guidage latéral de ce support d'impression.

7. Imprimante suivant l'une des revendications 1 à 5, caractérisée par le fait que le capot (6) du boîtier est raccordé à la partie inférieure (4) du boîtier de manière à pouvoir pivoter autour d'un axe de pivotement (10), qui s'étend transversalement par rapport à la direction d'introduction (8) du support d'impression et est parallèle au plan du support d'impression.

8. Imprimante suivant l'une des revendications 1 à 7, caractérisée par le fait que le capot (106) du boîtier est conçu de manière à loger des postes d'impression supplémentaires (150, 152), qui comprennent chacun un rouleau d'alimentation en papier (154,160) ainsi qu'un dispositif de transport du papier comportant des rouleaux de transport (224;231) et un dispositif d'entraînement (222;228) pour le transport du papier (156,161) à partir du rouleau d'alimentation en papier (154,160), le long contre-appui d'impression (122).

9. Imprimante suivant la revendication 8, caractérisée par le fait que l'un (150) des postes d'impression supplémentaires est réalisé sous la forme d'un poste d'impression de journal et comprend un rouleau d'enroulement entraîné (158) qui est raccordé au dispositif de transport du papier et est disposé en arrière du contre-appui d'impression (122), dans la direction de transport du papier (156).

10. Imprimante suivant la revendication 8 ou 9, caractérisée par le fait que l'un (152) des postes d'impression supplémentaires est réalisé sous la forme d'un poste d'impression de bons et comprend un dispositif de coupe (164,165), qui est raccordé à un dispositif d'entraînement (165) et est disposé en arrière du contre-appui d'impression (122), dans la direction de transport du papier (161).

11. Imprimante suivant l'une des revendications 1 à 10, caractérisée par le fait que le fond (32) de la partie inférieure (4) du boîtier est amovible et peut être remplacée par un boîtier d'extension (240) servant à loger des composants électriques et/ou électroniques supplémentaires, qui peuvent être raccordés au dispositif modulaire d'entraînement et de commande (34).

12. Imprimante suivant la revendication 11, caractérisée par le fait que le boîtier d'extension (240) loge l'équipement électronique d'un ordinateur personnel, auquel peuvent être raccordés les appareils périphériques tels qu'un clavier, un dispositif d'affichage, une unité à disquettes.

13. Imprimante suivant la revendication 11, caractérisée par le fait que le boîtier d'extension (240) loge un équipement électronique, qui est spécifique à une caisse, pour la commande d'appareils à caisses enregistreuses.

14. Imprimante suivant l'une des revendications 7 à 12, caractérisée par le fait que le capot (106) du boîtier est chargé à l'avance par des moyens à ressort (110) dans la position dans laquelle il est en appui sur la partie inférieure (104) du boîtier.

15. Imprimante suivant l'une des revendications 7 à 14, comportant des rouleaux de transport supérieurs, qui sont disposés dans le capot du boîtier et coopèrent avec les rouleaux de transport inférieurs, caractérisée par le fait que les rouleaux de transport inférieurs (116) et/ou supérieurs (214), qui sont situés en arrière de la tête d'impression (114) par rapport à la direction d'introduction (8) du support d'impression, sont plus mous que les rouleaux de transport situés en avant de la tête d'impression.

16. Imprimante suivant l'une des revendications 7 à 14, caractérisée par le fait que le capot supérieur (303) du boîtier possède une position de fonctionnement qui est indépendante de l'épaisseur du support d'impression et dans laquelle le capot est en appui contre la partie inférieure (302) du boîtier, et que les rouleaux supérieurs de transport (306, 307) et le contre-appui d'impression (305) sont disposés sur un support (308), qui, dans cette position de fonctionement, est réglable sensiblement perpendiculairement au plan du support d'impression et est chargé à l'avance par des moyens à ressort (311) en direction du plan du support d'impression.

17. Imprimante suivant la revendication 16, caractérisée par le fait que le support (308) est monté sur le capot du boîtier par l'intermédiaire d'un système d'articulation en ciseaux.

18. Imprimante suivant la revendication 16, caractérisée par le fait que le support (319) est raccordé au capot (314) du boîtier par l'intermédiaire d'un dispositif de leviers articulés parallèles (320).

19. Imprimante suivant la revendication 16, caractérisée par le fait que le support (338) est raccordé au capot (341) du boîtier par l'intermédiaire d'un guide longitudinal (333,344).

20. Imprimante suivant l'une des revendications 1 à 14, caractérisée par le fait que, dans une position de service du capot (376) du boîtier, dans laquelle ce capot est appliqué sur la partie inférieure du boîtier, les rouleaux de transport supérieurs (377,378) sont montés sur le capot (376) du boîtier de manière à être déplaçables sensiblement perpendiculairement au plan du support d'impression et sont chargés à l'avance par des moyens à ressort (383) en direction du plan du support d'impression.

21. Imprimante suivant l'une des revendications 8 à 20, caractérisée par le fait que les dispositifs d'entraînement pour les dispositifs de transport du papier des postes d'impression supplémentaires (402,403), qui sont disposés dans le capot (399) du boîtier, comprennent des moyens supérieurs d'accouplement (400,401), qui sont raccordés à ces dispositifs de transport du papier et qui, lorsque le capot (399) du boîtier est appliqué sur la partie inférieure (395) du boîtier, viennent s'accoupler à des moyens inférieurs d'accouplement (397,398), qui sont disposés dans la partie inférieure du boîtier et sont raccordés à un moteur d'entraînement.

22. Imprimante suivant la revendication 22, caractérisée par le fait que les moyens supérieurs d'accouplement (400,401) et les moyens inférieurs d'accouplement (397,398) sont formés par des pignons, qui se dégagent respectivement lorsque le capot (399) du boîtier est soulevé et viennent en prise lorsque le capot (399) du boîtier est mis en place.

23. Imprimante suivant l'une des revendications 3 à 22, caractérisée par le fait qu'au niveau du bord supérieur avant de la partie inférieure (406) du boîtier, d'une part, et au niveau du bord inférieur, associé à ce bord avant, de la cassette à ruban encreur (404) appliquée sur la partie inférieure du boîtier, d'autre part, il est prévu des moyens formant charnières (405,407,408), qui, lorsque la cassette à ruban encreur (404) est dans sa position écartée par pivotement à partir de la face supérieure de la partie inférieure (406) du boîtier, peuvent être amenés réciproquement en prise ou peuvent être dégagés les uns des autres et, lorsque la cassette à ruban encreur (404) est dans la position rabattue par basculement sur la face supérieure, sont raccordés entre eux de façon inamovible.

24. Imprimante suivant l'une des revendications 3 à 23, caractérisée par le fait que sur l'imprimante il est prévu des moyens (411) pour retenir l'extrémité avant, dans la direction d'entrée, de la cassette à ruban encreur (404).

25. Imprimante suivant la revendication 24, caractérisée par le fait qu'il est prévu, sur le capot (410) du boîtier, des surfaces de retenue (411) qui, lorsque le capot (410) du boîtier est dans la position dans laquelle il est appliqué sur la partie inférieure (406) du boîtier, viennent s'appliquer contre des surfaces antagonistes (409) d'une cassette à ruban encreur (404) appliquée sur la partie inférieure du boîtier.

26. Imprimante suivant l'une des revendications 1 à 14 ainsi que 21 à 25, caractérisée par le fait que les contre-appuis des rouleaux de transport sont réalisées sous la forme de rouleaux de transport supérieurs (394,393,394), qui sont montés fixes dans la partie inférieure (385) du boîtier et sont supportés d'une manière rigide ou élastiquement.

27. Imprimante suivant l'une des revendications 1 à 14 ainsi que 21 à 25, caractérisée par le fait que les contre-appuis des rouleaux de transport sont réalisées sous la forme d'éléments coulissants (361,362;365,366), qui sont montés fixes dans le capot du boîtier et sont supportés rigidement ou élastiquement.

28. Imprimante suivant l'une des revendications 7 à 14 ainsi que 21 à 25, caractérisée par le fait que les contre-appuis des rouleaux de transport sont réalisées sous la forme de rouleaux de transport supérieurs (393,394), qui sont disposés sur un bras basculant particulier (395), qui est disposé entre la partie inférieure (385) du boîtier et le capot (388) du boîtier et peut basculer autour de l'axe de basculement du capot (388) du boîtier.

29. Imprimante suivant l'une des revendications 7 à 28, caractérisée par le fait qu'un axe d'articulation (425) parallèle à l'axe de pivotement est monté rotatif dans la zone d'extrémité du capot (422) du boîtier, qui est éloignée de l'axe de basculement du capot (422) du boîtier, et que des bras articulés parallèles respectifs (426,427) comportant une rainure de guidage (428), qui s'étend dans leur direction longitudinale et qui est prévue pour l'engagement respectivement d'une tige de guidage (429) fixée sur la partie inférieure du boîtier, sont fixés aux deux extrémités de l'axe d'articulation (425).

30. Imprimante suivant l'une des revendications 1 à 29, caractérisé par le fait que le capot (414) du boîtier possède un canal de guidage du support d'impression, qui possède une première section d'introduction (417), qui est alignée dans le prolongement du plan du support d'impression, et une section de sortie (418,419), qui se raccorde à la section d'introduction et est coudée à partir de la direction de la section d'introduction.

31. Imprimante suivant l'une des revendications 1 à 30, caractérisée par le fait que la face frontale avant de la partie inférieure du boîtier (432) est agencée sous la forme d'une surface de montage (433) pour la partie de réception de la bande d'une cassette à ruban encreur (431), sur laquelle sont prévus des guides (436), qui se terminent de niveau avec le plan du support d'impression, pour la section (437) du ruban encreur, qui s'étend à l'extérieur de la cassette à ruban encreur, ces guides réalisant un guidage du ruban encreur entre la tête d'impression et le contre-appui d'impression.

32. Imprimante suivant l'une des revendications 8 à 31, caractérisée par le fait qu'il est prévu des transmetteurs (465,466;467) signalant le déplacement du papier et qui déterminent un mouvement de déplacement du papier d'impression (462) des postes d'impression pour son transfert à une unité de commande d'imprimante.

33. Imprimante suivant la revendication 32, caractérisée par le fait qu'aux axes de rouleaux, qui portent des rouleaux d'alimentation en papier ou des rouleaux d'enroulement du papier, ou un rouleau de guidage (463) entraîné par le papier transporté (462), est associé un disque de cadence (465) qui tourne avec ces rouleaux et dont la rotation est captée par un capteur de cadence (466).

34. Imprimante suivant l'une des revendications 8 à 33, caractérisée par le fait qu'un détecteur (472), qui détecte la fin du papier, est disposé en aval du rouleau d'alimentation (468) d'un poste d'impression.

35. Imprimante suivant l'une des revendications 10 à 34, caractérisée par le fait qu'une fente de sortie (443) pour la sortie d'une bande de papier pour bons est ménagée dans un joint de séparation entre le capot (441) du boîtier et une partie du boîtier (440), qui peut être écartée par pivotement à partir de ce capot, et que le dispositif de coupe (439) comprend un couteau (445), qui est déplaçable dans le capot (441) du boîtier ou dans la partie du boîtier pouvant être écartée par pivotement et un couteau antagoniste (450) monté fixe respectivement sur l'autre composant (440).

36. Imprimante suivant la revendication 35, caractérisé par le fait que le couteau (445) est disposé dans le capot (441) du boîtier et que le couteau antagoniste (450) est disposé dans la partie inférieure (440) du boîtier.

37. Imprimante suivant la revendication 35, caractérisée par le fait que le couteau (461) est disposé dans le capot (457) et que le couteau antagoniste (453) est disposé sur un bras basculant (455) qui est monté basculant sur ce couteau, qu'il porte également des rouleaux de transport supérieurs (451,452) et qu'il peut être écarté par basculement vers le bas.
